# EUROPEAN PATENT SPECIFICATION

(11) **EP 4 587 219 B1**
(45) Date of publication and mention of the grant of the patent: **31.12.2025**
(21) Application number: 22790276.4
(22) Date of filing: 16.09.2022
(51) Int. Cl.: B23Q 1/25, B23Q 1/58, B65G 1/00, G02B 21/26, F16C 29/00

(54) **LINKAGE MODULES FOR LABORATORY INSTRUMENTS SUCH AS IMAGING SYSTEMS**
VERBINDUNGSMODULE FÜR LABORINSTRUMENTE WIE ETWA BILDGEBUNGSSYSTEME
MODULES DE LIAISON POUR INSTRUMENTS DE LABORATOIRE TELS QUE DES SYSTÈMES D'IMAGERIE

(43) Date of publication of application: 23.07.2025
(73) Proprietor: Microqubic AG, 6300 Zug (CH)
(72) Inventor: TEMIZ, Yuksel, 6300 Zug (CH)
(74) Representative: E. Blum & Co. AG
(86) International application number: PCT/EP2022/075819
(87) International publication number: WO 2024/056191

(56) References cited:
- US-A- 5 357 158
- US-A- 5 789 892
- US-A1- 2018 241 325

## Description

### BACKGROUND

The invention relates in general to the field of laboratory instruments, such as instruments related to optical inspection and imaging systems, for example microscopes, macro photography tools, and water contact-angle measurement instruments. More precisely, this invention concerns linkage modules for laboratory instruments, as well as laboratory instruments equipped with such linkage modules. In particular, it is directed to a linkage module including a profile having trenches and cavities formed on its longitudinal sides, where the trenches form linear guiding elements to enable slider joints. The linkage module further includes a rotary electric motor at a lateral end of the profile and a circuit board that is fixed to the profile such that electronic components of the circuit board are housed inside the cavities of the profile. Some of these components form part of a circuit designed to control the rotary electric motor.

Optical inspection deals with the visual observation of an object (e.g., a sample or specimen) using a lens or a lens system. This is often performed with an optical microscope, which stands out as a fundamental tool in a variety of industries and applications, like biology, electronics, precision manufacturing, forensics, healthcare diagnostics, and education. Typically, in an optical microscope, a sample is placed under an objective lens and illuminated. A magnified image of the sample is observed through an eyepiece. The basic principles and designs of microscopes have essentially remained unchanged over time. However, technological advancements have led to better optics, as well as digitization of images at ever-increasing resolution, notably thanks to the use of charge-coupled devices (CCDs) or complementary metal-oxide-semiconductor (CMOS) image sensors.

Most microscopes are designed to view an object from its top or bottom. I.e., the optical axis of the microscope is typically aligned with the normal of the sample holder. However, this kind of imaging (referred to as 2D imaging herein) is not suited for inspecting certain objects, such as objects having a texture or pronounced topography, where protruding or receding features can have a substantial thickness or depth. This is notably the case with some biological samples, certain components and devices like electronic components, circuits, and other hardware components, as well as microfluidic devices and microelectromechanical systems (MEMS), for example.

As opposed to 2D imaging, 3D (or tilted) imaging can be defined as referring to techniques allowing a sample to be inspected from various viewing angles. Such techniques may notably be used to reveal 3D features of samples. A 3D imaging system, however, is challenging to design and fabricate because of the complexity of (i) the optics required for illumination and imaging from different angles, as well as (ii) the electro-mechanical components required to actuate the optics and the stages to precisely control the focus and centre of imaging. Some entry-level microscopes enable manual control and illumination. However, manual adjustments can be tedious, notably where high magnification levels are desired. Moreover, sample-to-sample consistency cannot be guaranteed in that case.

Some advanced optical systems offer motorized tilting, precise manipulation of samples, and 3D inspection. However, such systems are expensive (they typically cost more than $ 10 000) and bulky due to their complex opto-electro-mechanical assembly. In addition, they often have limitations in terms of size and type of sample, and magnification range. For example, a microscope designed for 2D and/or 3D imaging of microscopic features may not be adapted to capture an image of macroscopic objects. In addition, such systems can be impractical for certain applications, such as imaging sample cross-sections or measuring contact angles. There are additional issues, in terms of flexibility and scalability, as the present inventor observed. While the objective lens and/or optical components (e.g., filters) of such systems can often be easily replaced, other components (such as motorized stages, illumination sources, and sample holders) can typically not be changed quickly. Neither do their relative positions or configuration, which makes it difficult to adapt to a different imaging mode or an unusual sample size and/or configuration. Besides, it is difficult to add new parts and components in prior systems. As the present inventor concluded, the electro-mechanical components are typically controlled by a master electronic board, which hinders the scalability of such systems. The above constraints may pose a significant challenge, particularly for R&D laboratories, when the investigated samples or objects have unusual configurations or involve additional components (e.g., electrical cables, fluidic tubings, heating/cooling elements, etc.), as is often the case in the research and prototyping phases. Now, such unusual configurations or additional components often hinder the inspection.

A linkage module is disclosed in prior art US 2018/241325 A1.

With these various issues in mind, the present inventor came up to design a new concept of laboratory instruments.

### SUMMARY

According to a first aspect, the present invention is embodied as a linkage module for a laboratory instrument, where the linkage module basically includes a profile, a rotary electric motor, and a circuit board. The profile has two lateral ends and four longitudinal sides, notably including a first side, a second side, and a third side. The four longitudinal sides extend, each, between the two lateral ends. The profile is structured to have a first trench on the first side, a second trench on the second side, and one or more cavities on the third side. The first trench and the second trench form two linear guiding elements, which are designed to enable two slider joints, respectively. The rotary electric motor (hereafter the "motor") is fixed at one of the two lateral ends of the profile. The circuit board is fixed to the profile, on the third side thereof. The circuit board notably includes a circuit, which is designed to control the motor, in operation. The circuit includes electronic components that are arranged on a concealed side of the circuit board. The concealed side faces the one or more cavities on the third side of the profile. The electronic components are housed inside the one or more cavities.

The trenches enable slider joints, one of which may possibly be actuated by the motor, while the other can be configured as a passive joint (i.e., manually or externally actuated). Alternatively, each slider joint can be configured as a passive slider, while the motor is used to actuate an external component. Thus, the motor can have distinct configurations, allowing a motorized linear or rotary stage, whereas the electronics used to actuate the motor can be concealed and protected by the cavities housing them. Plus, the shape of the profile allows several linkage modules to be assembled compactly, in various configurations. I.e., the profiles can be rotated and fit together or to adapters, to interlock them easily. As a result, the proposed linkage module design makes it possible to obtain a modular instrument that is affordable, multipurpose, and adaptable.

In preferred embodiments, the circuit board extends over most of an entire length of the profile, preferably over substantially the entire length of the profile. The circuit board is further dimensioned to fit within the surface spanned by the third side of the profile and is arranged so as not to laterally protrude from the profile, along any direction in-plane with this surface. The surface of the circuit board can thus be increased (e.g., to accommodate touch switches and/or visual markers), yet without hindering the stacking of the assembled modules or impair movements of the modules with respect to each other or to other components.

In embodiments, the circuit board further includes an electrical port designed to be connected by a mating connector of a cable. The electrical port is connected to one or more of the electronic components to relay electrical signals to (and possibly from) the circuit board. This way, the motor can be externally actuated via the circuit board, thanks to external signals received from the mating connector through the electrical port. Preferably, the electrical port is a circular female socket (e.g., an audio jack socket), to allow the cable and the mating connector to freely rotate with respect to each other. More preferably, the input port is located at a distal end of the circuit board, opposite to a proximal end of the circuit board, where the proximal end is that end that is closest to the motor.

In preferred embodiments, the electronic components include one or more sensors (e.g., an angle sensor or, in variants, one or two magnetic end-stop sensors), to locally estimate the position of a part actuated by the motor. The circuit may notably be adapted to transmit signals produced by the sensors to the electrical port. In variants to, or in addition to the sensors, the circuit preferably includes a driving circuit, which is designed to drive the motor. As it may be realized, this effectively allows the number of electrical connections to the circuit board to be decreased.

In embodiments, the electronic components include a microcontroller arranged on the concealed side of the circuit board. The microcontroller is connected to at least one of the electronic components of the circuit board. The microcontroller includes a programmable, non-volatile memory, preferably an electrically erasable programmable read-only memory. The microcontroller is otherwise configured to connect to an external device, e.g., enabling a graphical user interface, to receive signals from the external device and accordingly program the programmable, non-volatile memory, for it to store a unique digital identifier, as well as calibration parameters. This way, the linkage modules can easily be controlled independently in the laboratory instrument, which further makes it possible to scale the instrument straightforwardly.

In preferred embodiments, the circuit board includes user-actuatable switches, which are preferably touch switches. The user-actuatable switches are arranged on an exposed side of the circuit board, i.e., opposite to the concealed side. The user-actuatable switches are connected to the microcontroller, to allow the motor to be directly actuated by a user, *in situ,* via the user-actuatable switches and the microcontroller.

In embodiments, the linkage module further comprises a housing having essentially the same cross-sectional dimensions as the profile. The motor is arranged in the housing. This housing extends at right angle from one of the two lateral ends of the profile. As a result, the profile and the housing have, together, an L shape or a T shape, which has advantages in terms of ergonomics.

In embodiments, the linkage module is configured as a motorized linear stage. In such embodiments, the motor is coupled to translate rotational motion into linear motion. To that aim, the profile further includes a timing belt and a sliding element. The timing belt is arranged in the profile to at least pass through the first trench. The sliding element is secured to the timing belt; it is designed to cooperate with the linear guiding element formed by the first trench, hence making up a slider joint. The rotary electric motor is coupled to the timing belt, which makes it possible to actuate the sliding element and make it slide in the first trench, in operation. This way, the sliding element can be coupled to a movable part of an external module (e.g., a camera or lens of an imaging module) or another linkage module to form a linkage.

Note, the timing belt may possibly be entirely fit in the first trench. However, a more robust and compact arrangement is one in which the timing belt passes through each of the first trench and a fourth trench that is structured on a fourth side of the four longitudinal sides, opposite to the first side. I.e., the timing belt loops through each of the first trench and the fourth trench, in operation.

Preferably, the sliding element includes one or more magnets (e.g., permanent magnets), where the magnets form two opposing poles arranged parallel to a longitudinal direction of the profile. Moreover, the circuit board further includes one or two end-stop sensors. Each of the end-stop sensors is adapted to sense a magnetic field generated by the magnets. The electronic components further form a detection circuit designed to detect one or two end points of the sliding element, based on a derivative of the sensed magnetic field, to be able to accordingly stop the motor. This approach makes the system less susceptible to inadvertent external magnetic fields. Plus, magnetic sensors can be arranged on the concealed side of the circuit board and have a longer lifetime than mechanical switches.

In preferred embodiments, the linkage module further comprises an adapter, which is fixed to the sliding element. The adapter is designed to allow a further linkage module to be fixed to the adapter, so that said further linkage module can slide along the first trench upon actuation by the rotary motor. The further module may notably be any of the linkage modules described above.

Preferably, the adapter is further designed to constrain an orientation of the further linkage module with respect to the linkage module upon fixing the further linkage module to the adapter. This adapter is more preferably shaped to allow the respective profiles of the linkage module and the further linkage module to extend either parallel or perpendicularly to each other.

The linkage module may also be embodied as a motorized rotary stage. I.e., instead of actuating a timing belt, the motor may rotate a coupler around a rotation axis that is perpendicular to the profile. That is, the linkage module further includes a shaft and a coupler, where the shaft extends perpendicularly to the longitudinal direction of the profile and the coupler is arranged to allow it to be coupled with an external element. The coupler is rotatable around an axis that is perpendicular to the third side of the profile. The motor is coupled to the shaft and configured to rotate the shaft, to rotate the coupler. In that case, the linkage module preferably includes an angle sensor, which is configured to measure an angle of the shaft.

In each of the above embodiments, the length of the profile is typically between 40 and 300 mm. This length is measured along a longitudinal direction of the profile, i.e., parallel to the four longitudinal sides. Meanwhile, the average width of the profile is typically between 10 mm and 50 mm, as measured perpendicularly to said longitudinal direction.

According to another aspect, the invention is embodied as a laboratory instrument (or "instrument" for short), such as an optical microscope and/or an imaging system. The instrument comprises one or more sets of modules, where each set includes two (or more) linkage modules according to the first aspect of the invention. In each set, the two linkage modules are mechanically coupled to each other to form a linkage allowing relative motion of the two linkage modules upon actuation by at least one of their respective motors.

In preferred embodiments, a given set of modules further includes an experimental module (e.g., an imaging module or a sample holder), in addition to its two linkage modules. The experimental module includes (or even consists of) a movable part and is mechanically coupled to one of the two linkage modules of said given set to form a linkage allowing relative motion of the movable part with respect to one or each of the two linkage modules of said given set, upon actuating the motor of one or each of the two linkage modules.

Preferably, the two linkage modules of the given set consist of a first linkage module and a second linkage module, each configured as a motorized linear stage. The second linkage module is coupled to the sliding element of the first linkage module, whereby the second linkage module can slide along the first trench of the first module upon actuation by the motor of the first linkage module.

In embodiments, the experimental module is an imaging module, which comprises a casing enclosing an image sensor and a lens. The casing is rigidly fixed to the profile of the second linkage module. The sliding element of the second linkage module is coupled to one of the image sensor and the lens (preferably the image sensor), to allow a relative distance between the image sensor and the lens to be changed upon actuation by the motor of the second linkage module.

In variants, the second linkage module is a linkage module, in which the motor is coupled to rotate a coupler, as discussed earlier. The experimental module is a sample holder, which is coupled to the shaft of the second linkage module, via the coupler, to allow the sample holder to be rotated in-plane. The second linkage module is coupled to the sliding element of the first linkage module, on top of the first linkage module, so as to be able to slide with respect to the longitudinal direction of the profile of the first linkage module.

In other embodiments, the pair of linkage modules is rotatably mounted to a link. I.e., the instrument further comprises a base, onto which the link is rotatably mounted, to be able to rotate along a circular path centred at a primary rotation axis. The pair of linkage modules is rotatably mounted to the link, to be able to rotate around a secondary rotation axis, parallel to the primary rotation axis. The link is preferably a linkage module configured as a motorized rotary stage, as discussed earlier. In this case, the pair of linkage modules can be coupled to the shaft of the link, e.g., directly or via an extension arm.

In further embodiments, the instrument has two sets of modules and further includes a sample holder. The first set of modules includes the pair of linkage modules, i.e., the first linkage module and the second linkage module, while the second set includes a third linkage module, a fourth linkage module, and a fifth linkage module. The motor of each of the third and fourth linkage modules is coupled to translate rotational motion into linear motion, while the motor of the fifth linkage module is coupled to rotate a coupler. The third linkage module is designed to be fixed to the base of the instrument, while the fourth linkage module is designed to be transversely coupled to the sliding element of the third linkage module, on top thereof, to be able to slide with respect to a longitudinal direction of the profile of the third linkage module. The fifth linkage module is designed to be transversely coupled to the sliding element of the fourth linkage module, on top thereof, to be able to slide with respect to a longitudinal direction of the profile of the fourth linkage module. I.e., the longitudinal direction of the profile of the fifth linkage module is perpendicular to the longitudinal direction of the profile of the fourth linkage module but parallel to the longitudinal direction of the profile of the third linkage module. The sample holder is designed to be coupled to the shaft of the fifth linkage module, to be able to be mounted on top of the fifth linkage module and rotate in-plane, thanks to the shaft.

In embodiments, the instrument further includes one or more light sources, these including a curved electric light having a curvilinear illumination surface. Preferably, the curved electric light includes a back-lit LED matrix or edge-lit LED elements. In each case, the LED source is arranged according to the curvilinear illumination surface. More preferably, the curvilinear illumination surface is at least partly profiled according to a cylindrical surface of a cylinder having said primary axis as cylinder axis.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 is a 3D view of an imaging system according to embodiments;
FIG. 2 is another 3D view, showing the system of FIG. 1 from another angle;
FIG. 3A depicts individual modules and components of the imaging system of FIGS. 1 and 2, prior to assembling the system, as involved in embodiments.
FIG. 3B illustrates how to connect such modules and components to obtain an imaging system as in FIGS. 1 and 2;

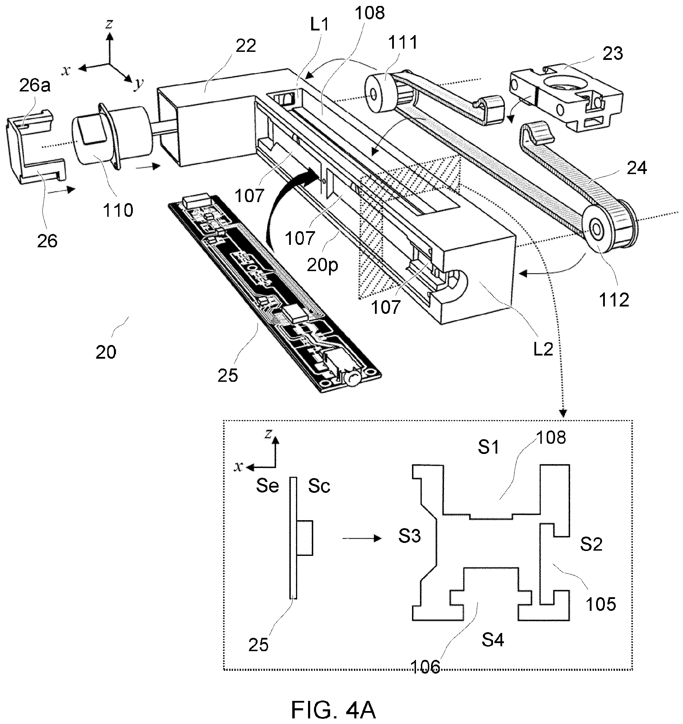

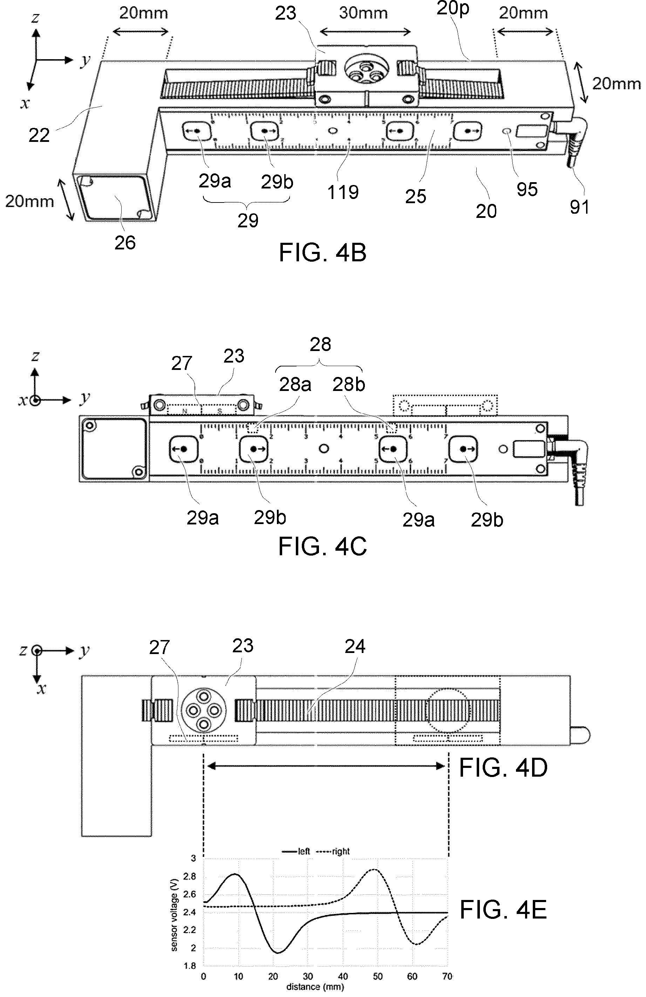

FIGS. 4A - 4E depict a linkage module configured as a motorized linear stage, i.e., having a motorized, belt-driven mechanism for linear actuation of its sliding element, according to embodiments. Trenches are structured on the longitudinal sides of the module profile to form the motorized slider joint, as well as two additional manual slider joints, such that multiple modules can be connected to each other in various configurations. A further longitudinal side of the profile fits a circuit board, see FIG. 4A and the cross-sectional view in the inset. FIG. 4B is a 3D view, FIG. 4C is a side view. The top view shown in FIG. 4D illustrates how the position of the motorized slider joint can be monitored based on the magnetic field (FIG. 4E) generated by magnets integrated in the sliding element;
FIG. 5A is another 3D view of the linkage module of FIGS. 4A - 4E, which further illustrates how the belt is secured (inset) and how an adapter can be connected to the sliding element of the module, as in embodiments;
FIG. 5B shows possible variants of the adapter of FIG. 5A, as involved in embodiments;
FIGS. 6A and 6B are further 3D views of the linkage module of FIGS. 4A - 5A, illustrating how thumb-screw and nut combinations can be inserted from the side (FIG. 6A) or the bottom (FIG. 6B) of the module, to form manual slider joints, as in embodiments.
FIGS. 6C - 6F are 3D views of a linkage of two linkage modules as in FIGS. 4A - 5A, where the two linkage modules have different relative orientations, as in embodiments;
FIGS. 7A and 7B are exploded views of the linkage module of FIGS. 4A - 5A, prior to (FIG. 7A) and after (FIG. 7B) inserting the belt-driven linear actuation mechanism. The circuit board is not yet fixed onto the profile of the linkage module, to show its electronics components;
FIGS. 8A - 8C are further 3D views of the linkage module of FIGS. 4A - 5A. FIG. 8A illustrates further details of the assembly of the linkage module. FIG. 8B is a 3D cross-sectional view of the module, highlighting the sliding element and the linear guide. FIG. 8C shows 3D views of the sliding element, before and after insertion of the magnets, as in embodiments;
FIGS. 9A - 9D are 3D views of another linkage module used for rotary actuation, according to embodiments. I.e., the motor of the linkage module is configured to rotate an external element.

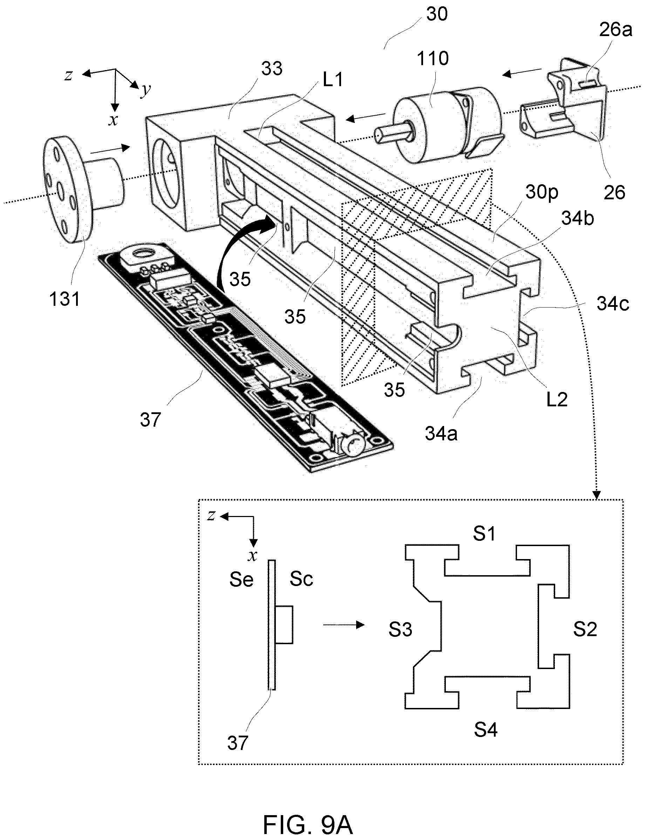

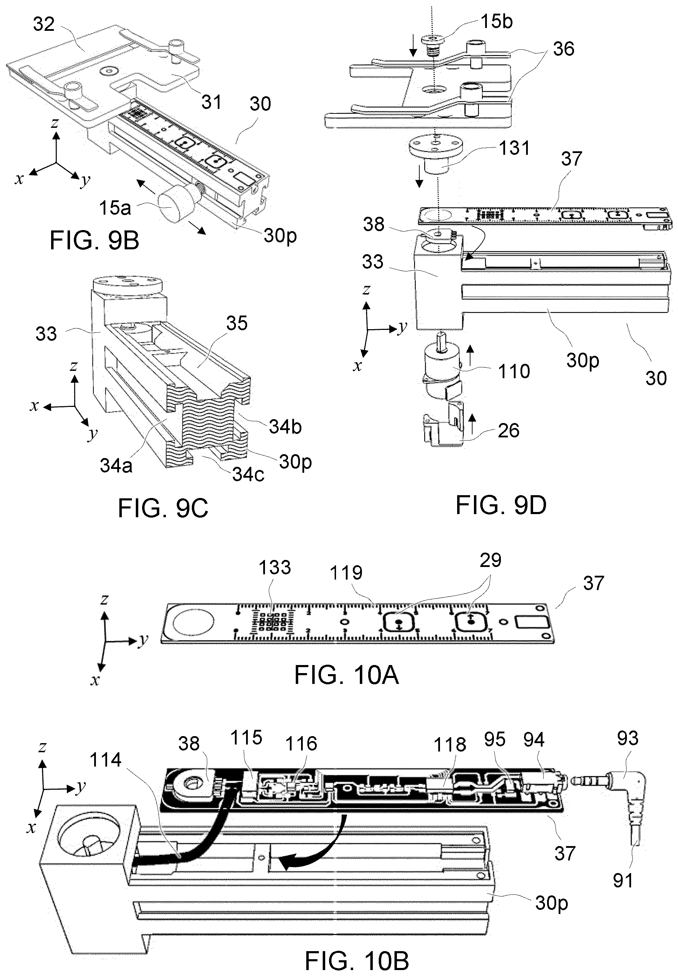

FIG. 9A illustrates the assembly of the main components. The inset shows a cross-sectional view of the profile. As seen in FIG. 9B (3D view) and FIG. 9C (cross-sectional view), this module includes manual slider joints, like the module of FIGS. 4A - 5A. FIG. 9D details the assembly, notably showing how a sample holder can be fixed to the rotation axis;
FIG. 10A shows the exposed side of the circuit board of the module of FIGS. 9A - 9D, while
FIG. 10B is an exploded 3D view of the concealed side of the circuit board, its components, and how it can be fixed onto the linkage module, as in embodiments;

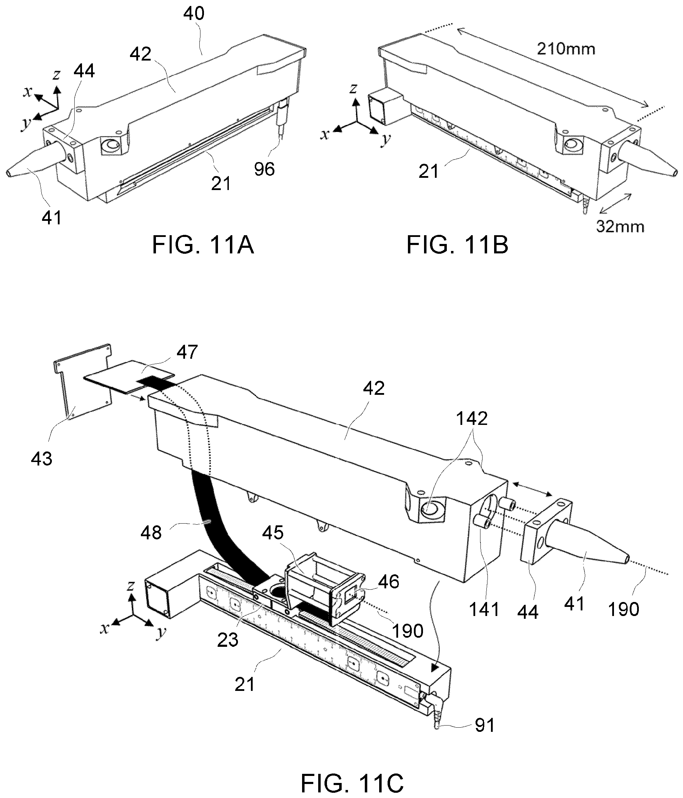

FIGS. 11A - 11C show 3D views of an imaging module, which includes a casing enclosing an objective lens and an image sensor, which can be actuated using a linkage module as in FIGS.
4A - 5A, as in embodiments. The assembly of the casing and the linkage module is detailed in the exploded 3D view of FIG. 11C;

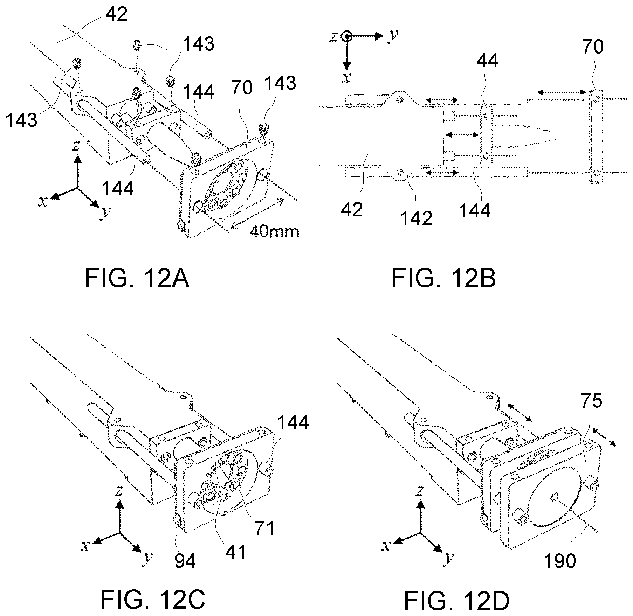

FIGS. 12A - 12D depict how various optical components, such as lenses, filters, and/or light sources, can be inserted into the imaging module of FIGS. 11A - 11C, as in embodiments. FIG. 12A (exploded 3D view) and FIG. 12B (top view) illustrate how the relative distances between the optical components can be adjusted. FIGS. 12C and 12D are further 3D views of the imaging module, where a ring illumination (FIG. 12C) and a diffuser are placed in front of the ring illumination (FIG. 12D);

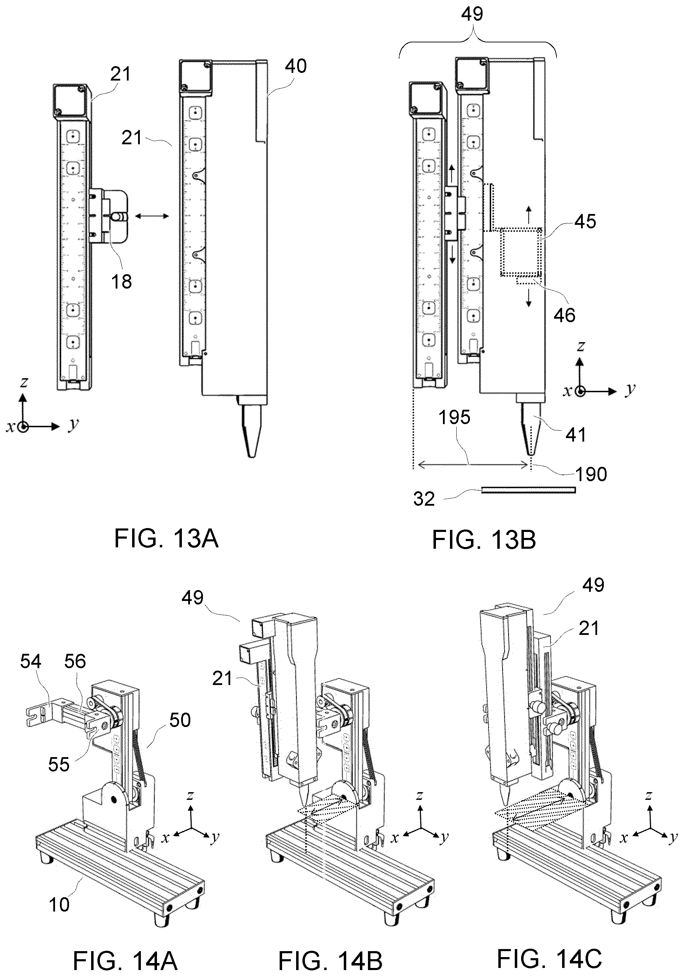

FIG. 13A and 13B are side views of an imaging assembly comprising the imaging module of
FIGS. 11A - 12D, coupled to two linkage modules as in FIGS. 4A - 5A for focus and zoom adjustment, as in embodiments. FIG. 13A and FIG. 13B respectively depict the assembly prior to and after connecting the two linkage modules;
FIGS. 14A - 14C are 3D views of a base and a link used to connect the imaging module to the base, as involved in a laboratory instrument according to embodiments. In FIG. 14B and FIG. 14C, the imaging assembly is connected to the link from its bottom and from its side, respectively. The former allows a more compact configuration, whereas the latter can be used to image larger samples;

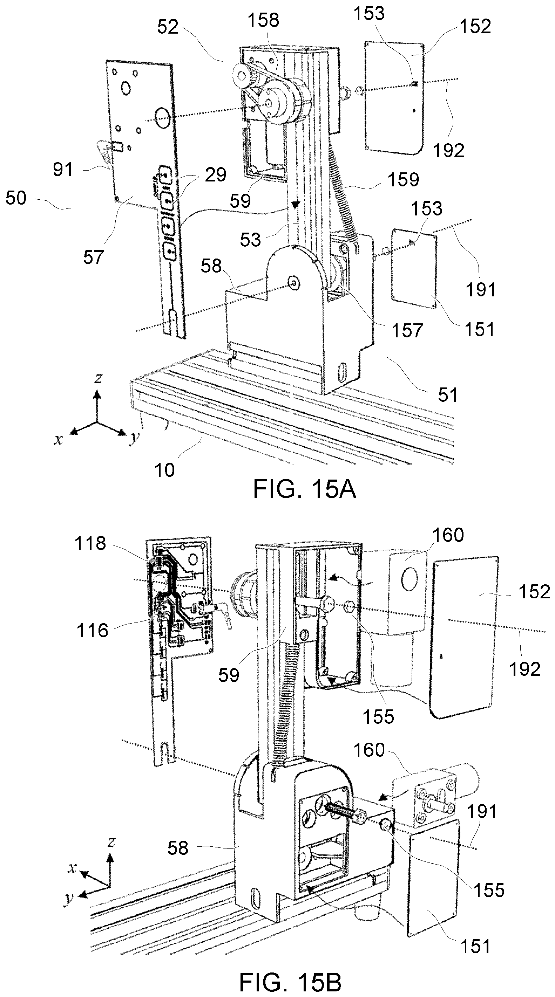

FIGS. 15A and 15B are exploded 3D views of the link seen from different angles, highlighting its main components and their assembly, as in embodiments;

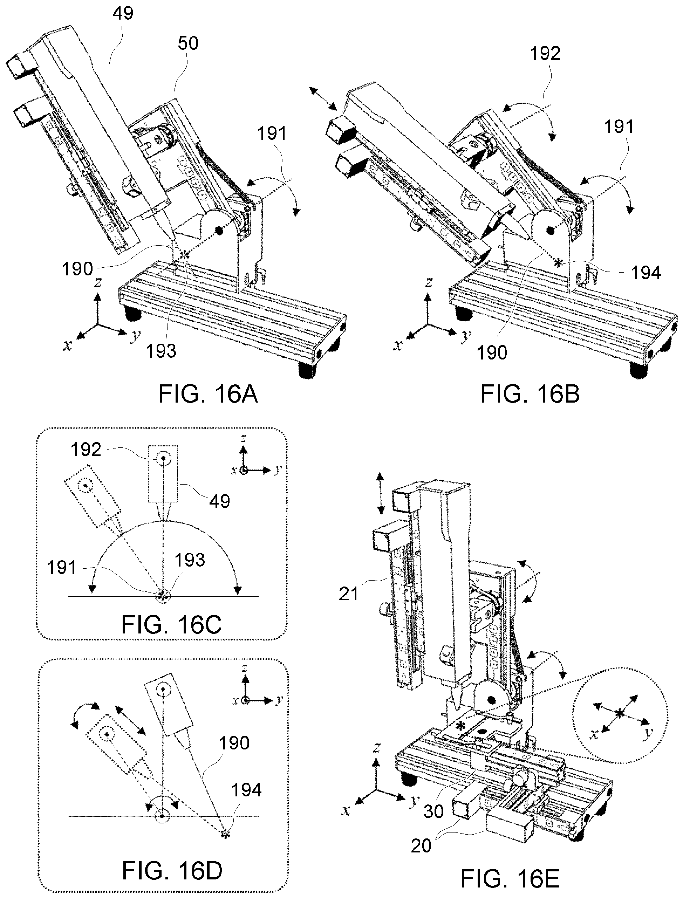

FIGS. 16A - 16E illustrate basic principles of a tilted/3D imaging technique according to embodiments. In FIGS. 16A (3D view) and 16C (side view sketch), the sample is aligned with the intersection of the imaging axis and the primary rotation axis so that tilted imaging can be done by rotating the imaging assembly around the primary axis. In FIGS. 16B and 16D, the sample is off-aligned. In the latter case, the sample can be kept in focus and centred during the tilted imaging procedure using both the primary and secondary axes and a motorized linear actuator. In both cases, the sample can be manipulated using an XYR stage (FIG. 16E);

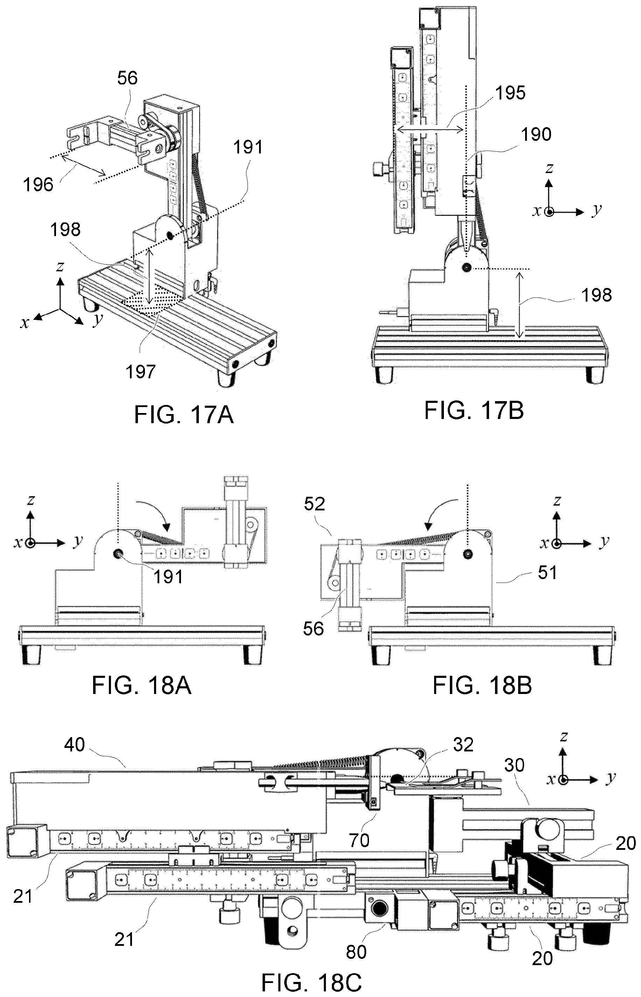

FIG. 17A is a 3D view of the base and the link, highlighting selected dimensions thereof, as in embodiments;
FIG. 17B again depicts the based and the link, from the side, after connection of the imaging assembly to the link, as in embodiments;
FIGS. 18A and 18B are side views of the base and the link, when the link is fully rotated clockwise (FIG. 18A) and counterclockwise (FIG. 18B), as in embodiments;

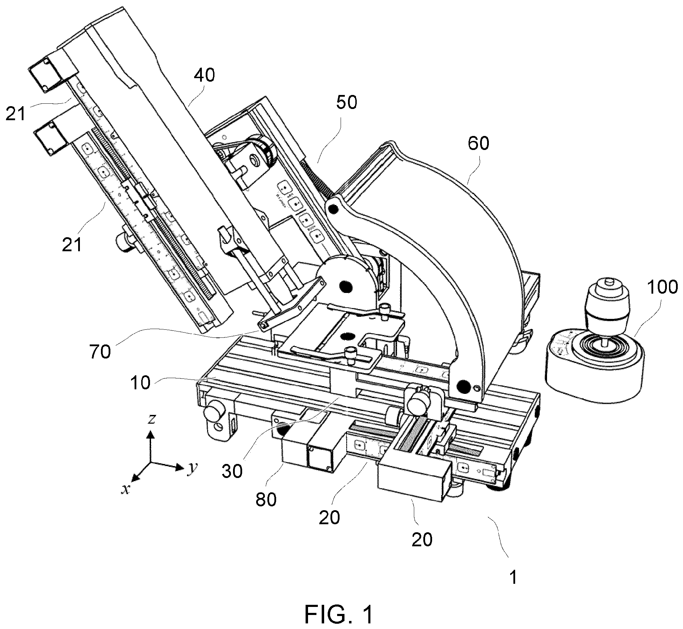

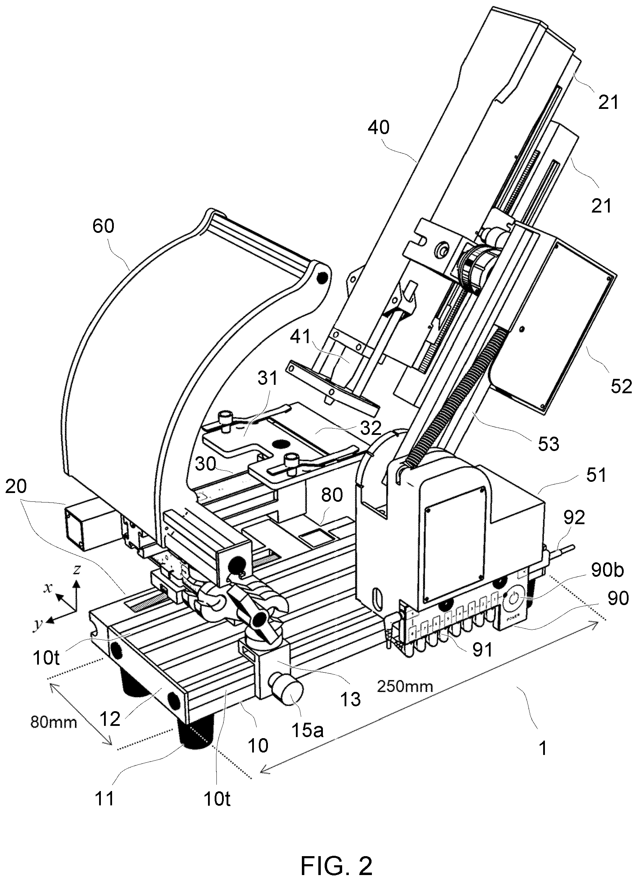

FIG. 18C is a 3D view (essentially a side view) of the imaging system of FIGS. 1 and 2, when the imaging assembly is fully rotated counterclockwise, showing that the module can move along a circular path without colliding with other modules, as in embodiments;

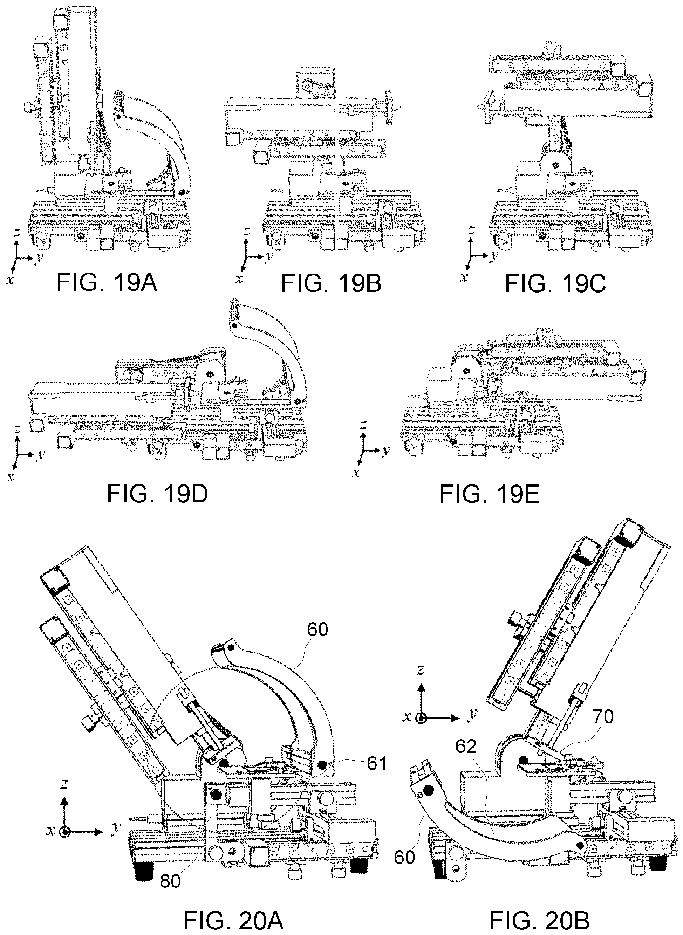

FIGS. 19A - 19E are 3D views illustrating various configurations for imaging modes and imaging angles, as in embodiments. For example, the system can be used as an upright or inverted microscope (FIG. 19A), a telescope or a webcam (FIGS. 19B, 19C), and a cross-section inspection tool or water contact-angle measurement tool (FIGS. 19D, 19E) by simply tilting the imaging assembly around the primary and/or the secondary rotation axes;
FIGS. 20A and 20B are 3D views of the imaging system of FIGS. 1 and 2, further involving a curved light source, as in embodiment. The curved light source is used to illuminate a sample from the top (for reflected-light imaging, FIG. 20A) or bottom (for transmitted-light imaging,
FIG. 20B, i.e., the same light source can be placed under the sample). FIG. 20A further depicts how a bottom illumination source can be raised to get closer to the sample for transmitted-light imaging, when the curved light source is not used; and

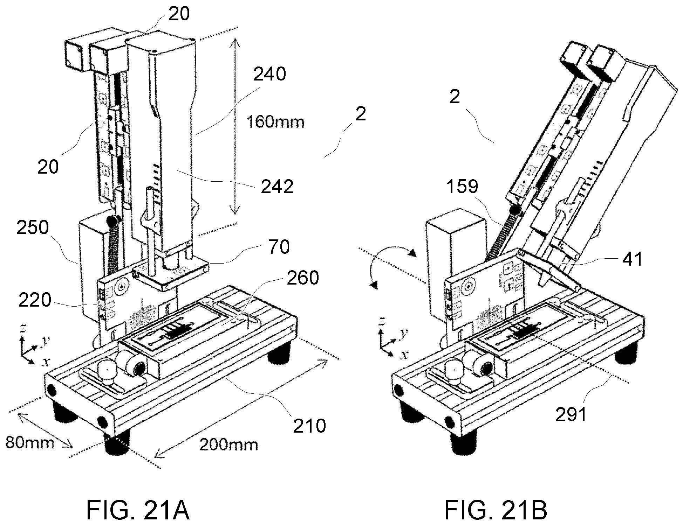

FIGS. 21A - 21B are 3D views of a more compact imaging system, relying on modules and principles that are similar to those of the system of FIGS. 1 and 2, according to embodiments.

This system has a single rotation axis for tilted imaging (FIG. 21B), instead of two. The light source can again be used for both reflected- and transmitted-light imaging.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Linkage modules and laboratory instruments embodying the present invention will now be described, by way of non-limiting examples.

### DETAILED DESCRIPTION OF EMBODIMENTS OF THE INVENTION

The present inventor came to develop a modular laboratory instrument, which can notably be embodied as a multipurpose, reconfigurable, motorized, programmable, and scalable instrument. The underlying concept is particularly suited for digital imaging applications and/or precise manipulation of small objects, notwithstanding the various configurations and/or the additional components they may have. This concept primarily relies on a linkage module.

The following description is structured as follows. General embodiments and high-level variants of linkage modules and laboratory instruments are described in section 1. Section 2 addresses examples of applications. Section 3 is a detailed description of the accompanying drawings.

### 1. General embodiments and high-level variants

A first aspect of the invention is now described in detail, in reference to FIGS. 4A - 10B. This aspect concerns a linkage module 20, 21, 30 for a laboratory instrument 1, 2 (or "instrument" for short) such as shown in FIGS. 1 and 2.

### 1.1 Linkage module

The linkage module 20, 21, 30 is designed to form part of an instrument 1, 2, which may for example be an optical microscope and/or an imaging system, e.g., for macro photography or contact-angle measurements, or optically scanning surfaces. This instrument 1, 2 is typically made relatively small and portable. It includes several linkage modules, which can be linked to form a mechanical linkage. The instrument concerns a second aspect of the invention, which is described later in detail.

### 1.1.1 Main features

The linkage module 20, 21, 30 basically includes a profile 20p, 30p, a rotary electric motor 110, and a circuit board 25, 37, as notably seen in FIGS. 4A and 9A. Essential features of this linkage module are described below. Sect. 1.1.2 briefly describes the concepts involved and high-level variants. The main advantages are discussed in sect. 1.1.3. Sect. 1.1.4 details general embodiments. Two classes of embodiments are described in sections 1.1.5 and 1.1.6, which concern linkage modules configured as motorized linear stages and motorized rotary stages, respectively.

The profile 20p, 30p has two lateral ends L1, L2 and four longitudinal sides S1 - S4. Each of the four longitudinal sides S1 - S4 extends between the two lateral ends. I.e., the sides S1 - S4 join two lateral sides of the profile at the lateral ends L1, L2 thereof. The four longitudinal sides S1 - S4 include a first side S1, a second side S2, a third side S3, and a fourth side S4. Each side S1 - S3 is structured to form trenches or cavities. The fourth side S4 may be flat or structured, e.g., to form a further trench, as in preferred embodiments.

In detail, the profile 20p, 30p is structured to have a first trench 108, 34b on the first side S1, a second trench 105, 106, 34a, 34c on the second side S2, and one or more cavities 107, 35 on the third side S3. The first trench 108, 34b and the second trench 105, 106, 34a, 34c form two linear guiding elements, which are designed to enable two slider joints, respectively. The fourth side S4 may possibly enable a further slider joint. What is more, the sides S1 and S4 may advantageously be structured so as to both accommodate a timing belt and enable a slider joint, as in preferred embodiments. Structurally speaking, the trench structures of the sides S2 and S4 can be equivalent, as assumed in the accompanying drawings.

The rotary electric motor (hereafter the "motor") 110 is fixed at one of the two lateral ends L1, L2 of the profile 20p, 30p. The motor 110 can for instance be a stepper motor (also called step motor or stepping motor), i.e., a brushless DC electric motor or, more generally, a DC motor.

The circuit board 25, 37 is fixed to the profile 20p, 30p, on the third side S3 thereof. Thus, a concealed side S_{c} of the circuit board faces the one or more cavities 107, 35 formed on the third side S3 of the profile. The circuit board may for instance be glued, press-fitted or screwed to the profile. The circuit board is preferably screwed to the profile, such that it can easily be replaced or maintained, if necessary.

The circuit board 25, 37 includes electronic components, which may form one or more electronic circuits. The circuit board 25, 37 notably includes a circuit that is designed to control the motor 110, in operation. I.e., the motor is controlled by (and preferably driven via) the circuit board 25, 37, thanks to signals generated at the circuit board. This circuit includes electronic components, which are arranged on the concealed side S_{c} of the circuit board 25, 37. Such components are safely housed inside the one or more cavities 107, 35 provided on the third side S3 of the profile.

### 1.1.2 Comments

Each linkage module is a standardized unit, i.e., a modular element, meant to cooperate with other parts, starting with similar or identical linkage modules, to form the instrument 1, 2. Each module can be regarded as a link because each module includes a motor 110, which can be actuated to move a slider in one of the slider joints or rotate a part, resulting in translational or rotational movement of a part that is mechanically linked to this linkage module.

The profile 20p, 30p may essentially have a rectangular or square cross-section, notwithstanding the trenches and cavities. I.e., the profile is bounded by a rectangular cuboid. The profile is typically an elongated element, having an aspect ratio: its length is larger than its average diameter in the cross-sectional plane. The rectangular section side lengths are preferably less than 40 mm, more preferably less than 30 mm, for example equal to 20 mm, while the profile length typically is between 40 and 300 mm. The profile can be regarded as a housing, i.e., a rigid casing that encloses and protects pieces of moving or delicate equipment (here sliders and electronic components).

The trenches form longitudinal openings (e.g., grooves or slots), which can have different cross-sectional profiles (e.g., having different shapes), being more or less deep and more or less structured. So do the one or more cavities meant to house the electronic components of the circuit board. Slider joints (i.e., prismatic joints) can thus be achieved, thanks to sliding elements (hereafter called "sliders" for short) moving in and along the trenches. The sliders may possibly form part of the linkage module or be attached or inserted afterward. In the present context, a slider joint should be understood as a linkage mechanism allowing a one-degree-of-freedom kinematic pair, which constrains the relative motion of the slider and the trench to slide along a common axis (parallel to the longitudinal direction of the profile), without permitting rotation. Note, however, that the slider itself may possibly include a rotatable element, i.e., allowing rotation of another part mounted onto it.

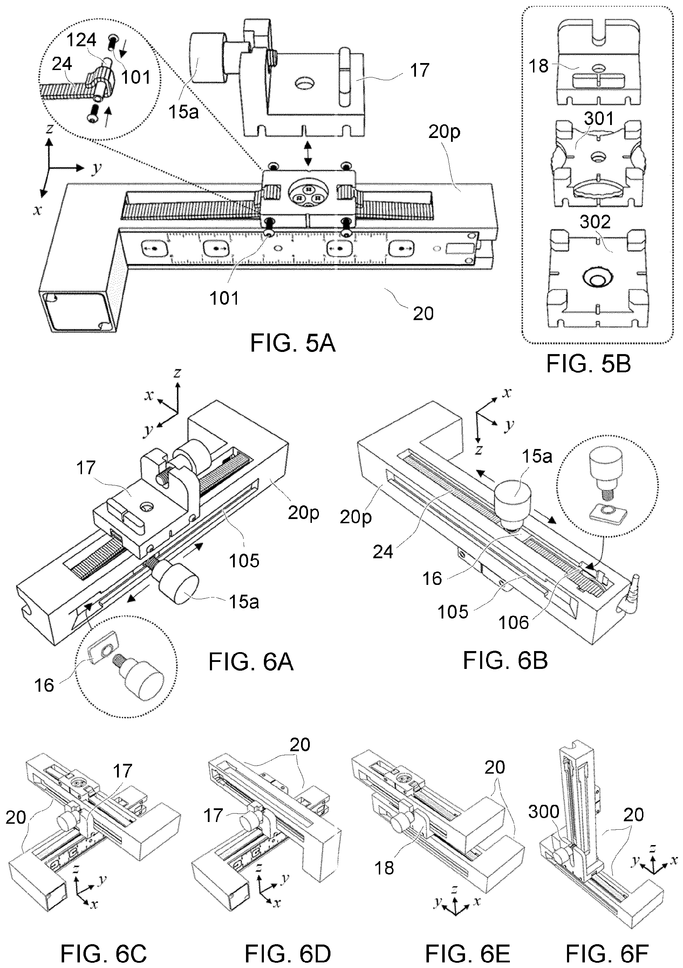

One of the slider joints may be actuated by the motor 110, for example the joint formed in the first trench 108. In that case, the first joint preferably includes a slider with a roll bearing mechanism (a linear-motion bearing), to ease the slide. This slider may for instance be actuated through a timing belt, as in FIGS. 4A - 5A. The one or two remaining slider joints (on sides S2 and S4) may possibly include sliders, e.g., sliding nuts, that are manually actuated. Such sliders can be used to pair two linkage modules 21, as shown FIGS. 13A, 13B. The manual slider joints do not necessarily include a roll bearing mechanism and a timing belt, as opposed to motorized sliders, as in preferred embodiments. For example, a manual slider joint can be formed using a combination of a thumb screw 15a and a sliding nut 16 inserted into the second trench 105, 106, 34a, 34c, as illustrated in FIGS 6A and 6B.

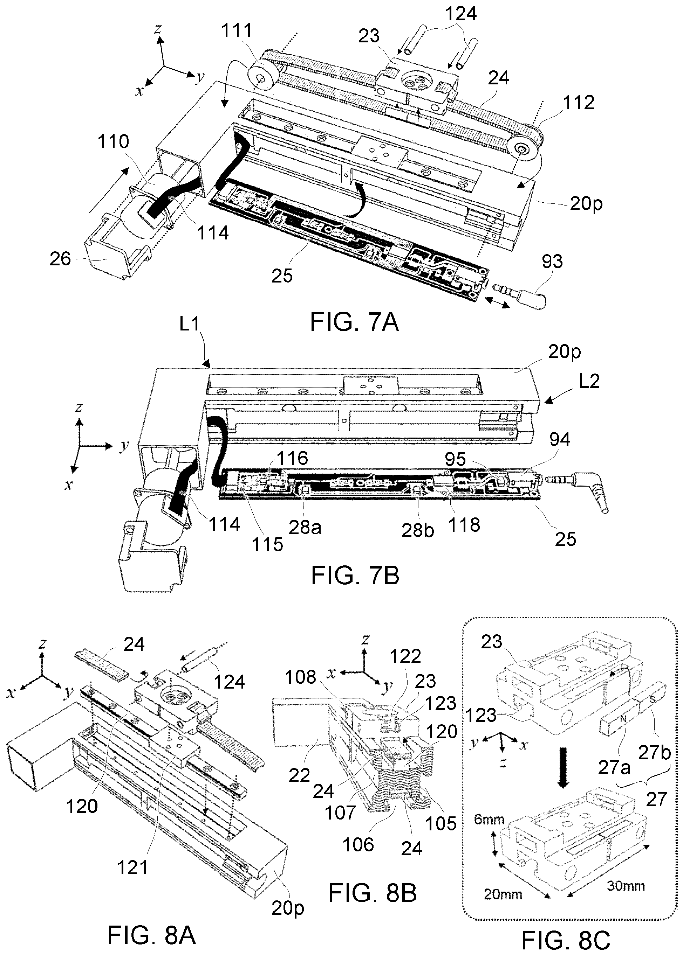

The circuit board 25, 37 is an electronic board used to affix electronic components on an outer layer thereof. It is typically a printed circuit board (PCB), as assumed in the accompanying drawings and in the following description. At least some of the electronic components of the PCB are arranged on a concealed side S_{c} of the PCB, opposite to its exposed side Sₑ. The concealed side S_{c} faces the profile. At least some of the electronic components form part of a circuit designed to actuate the motor 110. The PCB includes electrical connections between the electronic components and the motor's terminals. In particular, the PCB may connect the motor's terminals to one or more terminals of the PCB, which are preferably located on the opposite end of the PCB, i.e., close to the other end of the profile, opposite to the end to which the motor is fixed (i.e., towards the lateral end L2, see FIGS. 4A and 9A). For example, the motor 110 may be connected to the PCB via a set of cables 114, e.g., a flat ribbon cable or a bundle of separate cables. The PCB connection to the motor's electrical cable 114 is preferably as close as possible to the motor, i.e., in the vicinity of the lateral end L1, as illustrated in FIGS. 7A and 7B. The aim is for the cables 114 to minimally overlap with the PCB and components thereon, to minimize electrical noise.

The electronic components may notably form a driving circuit used to control the motor 110, in operation. In variants, the PCB components do not form a driving circuit but still includes active components (such as sensors) to detect an angular or linear position of a mechanical part that is actuated by the motor. I.e., such sensors monitor the mechanical movement of the part actuated by the electric motor 110, by providing a feedback signal measuring, e.g., the rotation of the motor shaft or the linear movement of an elements driven by the motor 110. Still, such sensors produce electrical signals that are used (and thus contribute) to actuate the motor.

In addition, or in variants, the PCB may advantageously include touch switches or other types of switches, such as mechanical or optical switches, which are arranged on the exposed side Sₑ of the PCB, for the user to locally control the motor 110 instead of controlling the motor from an external device. In that case, the PCB is double-sided, to allow user control on its exposed side Sₑ. Such switches form part of the driving circuit, which is preferably implemented directly on the PCB. In variants, the driving circuit may be partly external, in which case signals formed thanks to the touch switches are passed to external components that remotely drive the motor. This, however, requires long cables for each switch or sensor, which is impractical. Thus, it is preferred to have the driving circuit implemented directly on the PCB.

Note, the PCB may also be possibly configured to allow a bimodal operation, whereby the PCB merely relays external signals in one mode, whereas it allows a local user control in the other mode. The first mode does not require active electronic components (subject to possible touch switches), contrary to the second mode. So, in all cases, the PCB includes active electronic components, which at least contribute to controllably actuate the motor.

Note, in principle, the first, second, and third sides as defined above may be any side of the profile. For example, the third side may possibly be contiguous with each of the first side and the second side. In that case, the first and second sides are opposite to each other, and the third side extends in-between. Alternatively, the first side and the second side may be the contiguous sides S1, S2, as in FIGS. 4A and 9A. In that case, the third side can be any of the two remaining sides S3 or S4. In FIGS. 4A and 9A, however, the third side is assumed to correspond to side S3. The three sides S1, S2, S4 are contiguous, each meant to form a slider joint.

In the accompanying drawings, each profile 20p, 30p includes a single PCB on one side S3. Where the linkage module is configured as a motorized linear stage (FIGS. 4A - 5A), the motorized slider is housed on another side (the top side) S1 of the profile, while the remaining sides S2, S4 are structured to form remaining slider joints. However, only one of the residual slider joints can be used at a time when the linkage module is mounted onto another part (e.g., another linkage module) via said one of the residual slider joints. The two trenches meant to form the residual (non-motorized) sliders are on contiguous sides S2, S4 too, so that each linkage module can be mounted in different orientations, on one of the two sides S2, S4, e.g., via a sliding screw-nut combination.

At least some of the trenches can be designed to accept sliding screw-nut combinations, while the cavities on the third side S3 safely houses the electronics. This way, each module can be manually interlocked with another module (i.e., without necessarily using a tool) in different configurations for different applications and sample sizes. For example, the manual slider joint of a first module can be linked to the motorized slider joint of a second module using a sliding screw-nut combination, so that the relative position of the first module to the second module can be adjusted by sliding the first one manually. After the first module is fixed to the second module using the thumb screw, precise positioning can be achieved thanks to the motorized slider joint of the second module.

Each module has its own electronics to control the rotary motor 110. Such electronics may notably control and store key parameters (e.g., motor speed or current), as well as the latest settings (e.g., latest position), and may also enable a user interface. In particular, each module may store its own digital identifier ID to ease communications and allow the modules to work independently from each other, without requiring a master electronic board.

The modules have no electronic components protruding outside: the exposed side Sₑ of the electronic board can for instance be planar, possibly having touch-sensitive switches 29a, 29b, with an opening for an embedded LED indicator 95, and text/markers 119, 133 printed on the top silkscreen layer of the PCB.

That electronic components are housed inside the cavities means that such components protrude into interiors of cavities, such that inner walls delimiting the cavities 107, 35 partly encloses such components. The one or more cavities 107, 35 can possibly be made conformal with the layout of the electronic components on the concealed side S_{c}. Each profile 20p, 30p may contain a single cavity to house all concealed electronics. In variants, several cavities may be arranged in accordance with the locations of the inner electronics and their dimensions, starting with their thickness (as measured out-of-plane), as assumed in the accompanying drawings.

### 1.1.3 Main advantages

The proposed approach has several advantages. The trenches enable slider joints, one of which can be actuated by the motor, while the others can be actuated manually (e.g., linkage module 20). Alternatively, each slider joint can be configured as a manual slider, while the motor can be configured to rotate an external component (e.g., a linkage module 30). Thus, the motor may have distinct configurations, enabling a linear or rotary stage, whereas the electronics used to actuate the motor can be concealed and protected by the cavities in which they are safely housed. The slider joints can be used to link to another linkage module or a movable part of, e.g., an imaging system. The shape of the profile allows several linkage modules to be compactly assembled, in various configurations. I.e., the rectangular (preferably square) cross-section of the modules makes it possible to rotate them and fit them together or to adapters. I.e., various combinations and configurations of the modules can accordingly be obtained.

As a result, the proposed linkage module design allows a modular and easily reconfigurable instrument (involving several, e.g., six, of such modules) to be achieved. That each module relies on a similar design eases the assembly process and lowers the overall costs. As a whole, the features of the present linkage modules allow an affordable, multipurpose, and adaptable (i.e., reconfigurable) instrument 1, 2 to be obtained.

### 1.1.4 General embodiments of the linkage modules

The PCB 25, 37 may cover the third side S3 of the profile, at least partly. I.e., the PCB may only partly extend along this side S3 of the profile, such that the remaining surface portion may have another function. However, the PCB 25, 37 preferably extends over most of the profile 20p, 30p, more preferably over substantially the entire length of the profile 20p, 30p. This increases the exposed surface of the PCB (all things being otherwise equal), which can thus better accommodate touch switches, although most of the electronic components remain on the concealed side, safely housed inside the cavities 107, 35.

The PCB is otherwise dimensioned to fit within the surface spanned by the third side S3 of the profile. It is further arranged so as not to protrude from the profile 20p, 30p along any direction in-plane with this surface. In other words, the PCB is preferably dimensioned to accurately fit the side (or a longitudinal portion thereof) on which it is fixed to the profile (as best seen in FIGS. 4C and 9B), without exceeding it (overhanging) laterally, so as to maximize the relative size of the PCB while not hindering the stacking of modules or impairing relative movements of the modules with respect to each other or to other parts of the instrument 1, 2.

As said, the electronic components may include one or more sensors, such as an angle sensor or position sensors (e.g., magnetic end-stop sensors). Moreover, the PCB circuit preferably includes a driving circuit to drive the motor 110. Beyond active electronic components, the PCB may also include passive components, as in typical embodiments. In particular, the PCB 25, 37 may include an electrical port 94 designed to be connected by a mating connector 93 of a cable 91 (typically a multi-wire cable or a flat ribbon).

The electrical port 94 may notably be a circular female socket such as an audio jack socket, to allow the cable 91 and the mating connector 93 to freely rotate with respect to each other, as assumed in FIGS. 7A, 7B. The port 94 is most conveniently located opposite to the motor 110. That is, the input port 94 is preferably located at the distal end of the PCB 25, 37, opposite to the proximal end of the PCB 25, 37, where the proximal end is closest to the motor 110, to minimize potential interference with the cable 91.

The electrical port 94 is connected to one or more of the electronic components (e.g., sensors, driving circuit) of the PCB. The electrical port 94 may notably receive electrical signals transmitted through the cable 91 and the connector 93, to allow the motor 110 to be externally actuated via the PCB 25, 37. The port may actually allow two-way communications, should the electronic components of the PCB include sensors, such as an angle sensor or one or two magnetic end-stop sensors. In that case, the PCB circuit may indeed be designed to transmit signals produced by the sensors to the electrical port 94, which may be useful for an external device to calibrate and/or calculate the position of the moving parts. So, the electrical port may not only be used to apply signals to the motor but, in addition, to read signals from the PCB sensors.

Preferred is a PCB that includes both a driving circuit and one or more sensors, for the following reasons. One may contemplate to directly connect a cable 91 to the motor's terminals, to relay externally-generated motor control signals to the motor 110; no PCB would be required in that case. However, it would not be possible to estimate the position of the motor, as this requires angle or end-stop sensors *in situ,* hence the benefit of a PCB that at least includes sensors. However, if the PCB does not include a driving circuit (instead the motor's terminals are connected to external electronics), then a larger number of electrical connections to the PCB are needed. Indeed, stepper motors typically require four wires whereas motor driver electronics can work with only two signals (e.g., step and direction signals), which the driving circuit can translate into four distinct signals to drive the motor. Now, the driving circuit requires power and ground signals that can be shared with the sensors, hence the lower number of connections required. Thus, a preferred approach is for the PCB to include both a driving circuit and sensors.

Beyond the driving circuit and sensors, the electronic components may advantageously include a microcontroller 118. The latter is arranged on the concealed side S_{c} of the PCB 25, 37 and safely housed in a cavity of the profile. The microcontroller includes a programmable, non-volatile memory, which is preferably an electrically erasable programmable read-only memory (EEPROM), as assumed in the following description. The microcontroller 118 is connected to at least one of the electronic components of the PCB. It may further connect to the port 94 and be configured to connect to an external device, such as a device enabling a graphical user interface (GUI), e.g., a smartphone or laptop. The microcontroller 118 may accordingly receive signals from this external device to program the memory, for it to store a unique digital identifier (ID), as well as calibration parameters. The communication with the microcontroller 118 can be done using only one or two wires using standard serial communication protocols, such as the Universal Asynchronous Receiver/Transmitter (UART) protocol.

Equipping each linkage module with a dedicated microcontroller 118 makes it possible to connect any number of modules without requiring to design or redesign an external electronic board (e.g., a master board), which would be more complex given that a master board design depends on the number of connected modules and their arrangement. Instead, one may assign an ID to each module and store this ID in each microcontroller. As a result, the user can blindly send a command including a given ID to all connected linkage modules, yet only the relevant module (i.e., which is assigned that ID) will respond, e.g., by sending commands to the motor driver electronics or reading signals from the sensors and/or the motor driver. Having a dedicated microcontroller 118 on each module further simplifies the arrangements of the electrical cables 91 because multiple modules can be connected to each other or to a further module 90 of signal and power distribution in any order i.e., no physical cable assignment is required because the modules share the same wires/signals for communication. In addition, motor driver electronics can include additional features (e.g., micro stepping settings, diagnostic signals) that are controlled or read by the microcontroller, *in situ.* Having a dedicated microcontroller 118 on each linkage module allows simple and cost-effective microcontrollers to be used. Instead, accessing all signals of all modules using a single external board would require a microcontroller with many pins and a large memory for the firmware.

In embodiments, the PCB 25, 37 further includes user-actuatable switches 29a and 29b, which are preferably touch switches. The switches are arranged on the exposed side Sₑ of the PCB. They are connected to the microcontroller 118, to allow the motor 110 to be directly actuated by the user via the switches 29 and the microcontroller 118. In the accompanying drawings, references 29a and 29b refer to two separate switches, which are used for the two opposite directions: clockwise (CW) and counterclockwise (CCW), or effectively the left-right directions where the linkage module is implemented as a motorized linear stage (see sect. 1.1.5).

The linkage module 20, 21, 30 typically comprises a housing 22, 33, in which the motor is arranged. Together, the profile and the housing form the body of the linkage module. The housing 22, 33 has essentially the same cross-sectional dimensions as the profile 20p, 30p and extends at right angle from one of the two lateral ends of the profile 20p, 30p. Thus, the body of the linkage module has a T shape or an L shape. Such a design result in an ergonomic shape, allowing the linkage modules to be assembled and stacked in a compact manner, in a variety of configurations (including parallel and transverse configurations of paired modules), while minimizing interferences between the modules and/or with additional modules of parts of the instrument 1, 2. Preferred is to rely on an L shape for the motorized linear stage (because the motor shaft is connected to the timing belt 24 looping inside the profile 20p) and a T shape for motorized rotary stages, for ergonomic reasons discussed later.

In typical embodiments, the length of the profiles 20p, 30p is between 40 and 300 mm. The length is measured along the longitudinal direction of the profile, i.e., is parallel to the four longitudinal sides S1 - S4. Meanwhile, the average width of the profile or, more exactly, the width of a box bounding the profile, is between 10 mm and 50 mm. The width is measured perpendicularly to the longitudinal direction. The optimal length of the profiles 20p, 30p will typically depend on the application. The profile length may be optimized in accordance with expected dimensions of the samples (which depend on the applications).

In some cases, the profile may have to be longer than 300 mm. However, long PCBs can then become impractical or expensive. In such a situation, the PCB can still be split into two or more parts, placed side by side on the third side S3 of the profile. The PCB parts can then be electrically connected via a cable.

### 1.1.5 Linkage module configured as a motorized linear stage (motorized linear slider)

The linkage module 20, 21 may notably be configured as a module having a motorized linear slider. I.e., in embodiments, the module profile 20p includes a timing belt 24 and a slider 23, where the slider 23 is secured to the timing belt 24, as in FIGS. 4A - 8C. The timing belt 24 may possibly fit into a single trench of the profile, e.g., a trench structured deep enough on a longitudinal side that is contiguous with the third side S3, such as the side S1. Preferably, however, the timing belt 24 loops through each of the first and the fourth trenches 108, 106, as assumed in the accompanying drawings. I.e., it passes through each of the fist trench 108 and the fourth trench 106, as best seen in FIG. 8B, see also FIGS. 6A and 6B. This gives rise to a more compact design (the trenches can be shallower), which is also more reliable because the belt is better channelled.

The slider 23 is otherwise designed to cooperate with the linear guiding element formed by the first trench 108, hence making up a slider joint. The motor 110 is coupled to the timing belt 24, such that it can actuate the slider 23 and make it slide in the first trench 108, in operation. This way, the slider 23 can be coupled to a movable part of an external module (e.g., a camera or lens of an imaging module 40) or another linkage module to form a linkage. This can notably be exploited to zoom in/out and keep in focus, or to actuate one module with respect to another module, either in translation or rotation, as in embodiments discussed below.

In embodiments, the linkage module may rely on usual position or end-stop detectors, e.g., based on mechanical switches. However, the linkage module 20 will much preferably enable end-stop detection (also called end-point or limit detection) using magnets 27 and magnetic sensors 28a, 28b. That is, the slider 23 may notably include one or more magnets 27 (e.g., permanent magnets), where the magnets 27 form two opposing poles, as seen in FIGS. 4C and 4D. The poles are arranged parallel to the longitudinal direction of the profile 20p. In addition, the PCB 25 may include one or two end-stop sensors 28a, 28b, such as analogue hall-effect sensors. Best is to have two end-stop sensors 28a, 28b located in respective halves of the PCB, i.e., off-centred toward each lateral end of the PCB; the lateral ends are delimited by the smaller edges of the PCB.

Each end-stop sensor is adapted to sense the magnetic field generated by the magnets 27. A single end-stop sensor may be used to accurately measure the slider position on one side only. Preferred is to have two end-stop sensors, one on each side, as in FIGS. 4A - 4D. Where long linkage modules are used, more than two sensors may possibly be distributed along the PCB 25, in order to improve the accuracy of the estimated position of the slider 23.

In this case, the electronic components further form a detection circuit, which is designed to detect one or two end points of the slider 23, based on a derivative of the sensed magnetic field, in order to accordingly stop the motor 110. For example, two magnets 27a, 27b can be attached to each other in a way that they create a magnetic field from north (N) to south (S), or vice versa, when the slider 23 travels over the magnetic sensors. Now, instead of relying on the absolute value of the magnetic field measured by the sensors, the slope of the signal can be used to detect the end points and automatically stop the motor 110. Measuring the slope makes the system less susceptible to inadvertent external magnetic fields, e.g., due a permanent magnet in the vicinity of the instrument. In variants, though, the same end-stop sensors 28a, 28b, can be used to determine the absolute position of the slider 23, e.g., by measuring the magnetic field and then extracting the position information by interpolation or from a look-up table.

Magnetic end-stop detection is particularly convenient in the present context because the magnetic sensors 28a, 28b can be arranged on the concealed side S_{c} of the PCB 25. I.e., they do not have to be placed on the exposed side of the PCB 25, unlike mechanical or optical switches, which has a number of advantages. This provides more room on the exposed surface of the PCB, e.g., notably for switches and visual markers 119 (FIG. 4B). In addition, such sensors can be calibrated from software. Furthermore, magnetic sensors have a longer lifetime than mechanical switches. Moreover, magnetic end-stop detection makes it possible to exploit the profile over most of its entire length, with little to no dead zone, contrary to what usual end-stop measurement methods permit.

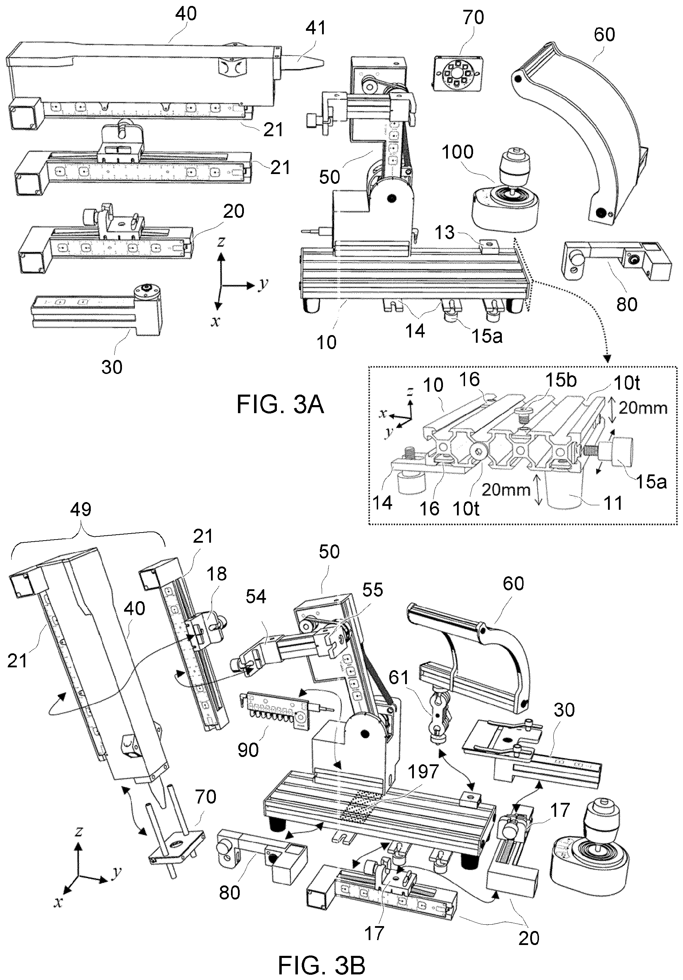

As further seen in FIGS. 3B, 5A - 6D, and 13A, a given linkage module 20, 21 may further comprise an adapter 17, 18, which is fixed to the slider 23 of this module. Now, this adapter 17, 18 can be designed to be fixed to a further linkage module 20, 21, 30, which can accordingly slide along the trench 108 of the reference linkage module 20, 21 upon actuation by its motor 110.

I.e., pairs of linkage modules can be formed, e.g., to enable optical functions of an imaging module 40, as discussed later in detail. Moreover, triplets of linkage modules can similarly be formed, to enable a motorized XYR stage, i.e., allowing positioning in the (*x, y*) plane, as well as rotation around an axis perpendicular to this plane, to adequately translate and rotate a sample 32, in operation. For instance, a module 20, 21, 30 may include any interface part designed to cooperate with linear guiding elements of this module 20, 21 and another, similar linkage module, to interlock the modules and yet allow them to slide relatively to each other, as illustrated in FIG. 13B.

The adapter 17, 18 may notably be designed to constrain the relative orientation of the further linkage module 20, 21, 30 with respect to the reference linkage module 20, 21 upon fixing the further module 20, 21, 30 to the adapter 17, 18. For example, the adapter 17, 18 can be shaped to allow the respective profiles of the assembled linkage modules to extend either parallel or perpendicularly to each other. That is, the shape of the adapter constrains the relative orientations of the profiles. E.g., the two profiles may then be mounted parallel or perpendicular to each other. More generally, the trenches of the profiles 20p may be designed to accommodate customized adapters (e.g., FIG. 5B) with thumb screws, magnets, or spring lock mechanisms, to connect the modules to each other in different configurations and orientations.

### 1.1.6 Linkage module configured as a motorized rotary stage

Besides motorized linear sliders, the present linkage modules can also be embodied as a linkage module 30 for rotary actuation, as now discussed in reference to FIGS. 9A - 10B. I.e., in embodiments, the linkage module 30 includes a shaft extending perpendicularly to the longitudinal direction of the profile 30p. The module 30 further includes a coupler 131, which is arranged so that this coupler 131 may be coupled by an external element, such as a sample holder 31. The coupler 131 can otherwise be rotated around an axis that is perpendicular to the third side S3 of the profile 30, see FIGS. 9A - 9D. Furthermore, the motor 110 is coupled to the shaft and configured to rotate the latter, so as to rotate the coupler 131, in operation. Such a configuration can be exploited to rotate a sample holder 31, in-plane, or as part of a link 50, as in embodiments discussed later.

Again, the module 30 may include a sensor 38, here an angle sensor configured to measure the angle of the shaft. The angle sensor can notably be a magnetic sensor or a resistive sensor. For example, an angle sensor or rotary sensor can be used to measure the position of the motor or, equivalently, the position of the shaft coupled thereto. The dimensions and the positions of the angle sensor, motor, PCB, and the housing, can be designed in a way that the angle sensor is directly soldered to the PCB just like the magnetic end-stop sensors evoked in the previous subsection, without using a cable extension, which simplifies the manufacturing.

Note, the motors 110 used in the modules 20, 21, 30 can all be identical. In variants where the present linkage module concept is used to form a link 50, a different motor 160 may be used, enabling larger torques, and coupled to the shaft using a gear- or belt-driven speed reduction mechanism. In that case, the angle sensors 153 can be placed on another PCB 151, 152, as shown in FIGS 15A and 15B.

The linkage modules described above (in particular each of the two concepts discussed in sect. 1.1.5 and 1.1.6) can advantageously be used in a modular instrument, as discussed in the next section.

### 1.2 Modular instruments based on linkage modules

Another aspect of the invention is now described, which concerns an instrument 1, 2 such as shown in FIGS. 1 and 2. In general, the instrument 1, 2 includes one or more sets ("module sets") of linkage modules 20, 21, 30 as described above. Each set includes at least two linkage modules 20, 21, 30. A module set may for instance include two or three linkage modules, as in embodiments discussed below. In each module set, the linkage modules 20, 21, 30 are mechanically coupled to each other, to form a linkage, which allows relative motion of the linkage modules (or parts thereof) upon actuating the motor 110 of one of the linkage modules. This makes it possible to design versatile instruments 1, 2, enabling actuatable sample holders, light sources, imaging systems, etc., as in embodiments discussed below.

A typical configuration of a module set is one involving an experimental module 31, 40, in addition to two linkage modules 20, 21, 30. Here, "experimental" means relating to scientific experiments. The experimental module 31, 40 may for instance be an imaging module 40 or a sample holder 31. The experimental module 31, 40 includes or consists of a movable part, which is mechanically coupled to one of the two linkage modules 20, 21, 30 of the module set. This results in a linkage allowing relative motion of the movable part with respect to one or each of the two linkage modules in this module set, upon actuating the motor of one or each of these two linkage modules.

Depending on the configuration of the linkage modules, the movable part of the experimental module 31, 40 may be slid or rotated. For example, the movable part may be an image sensor 46 or a lens 41 of an imaging module 40. In that case, the part is movable with respect to a reference part (e.g., a casing 42) of the experimental module. The movable part may also be a sample holder 31, which is rotated with respect the module 30 housing the motor to which this part is coupled. Other variants can be contemplated, which are not necessarily related to imaging applications, where the experimental module is a pick-and-place tool, or a pipetting tool used to manipulate small objects or liquids.

The instrument 1 may for instance include two module sets: one in which the experimental module is an imaging module that is linearly actuated thanks to linkage modules as discussed in sect. 1.1.5; and another set where the experimental module is a sample holder that is rotated thanks to a linkage module as described in sect. 1.1.6.

### 1.2.1 Imaging module linearly actuated for both zoom and focus (imaging assembly)

Linear actuation requires at least one linkage module (sect. 1.1.5). Interestingly, concurrent linear actuations can be achieved by coupling two linear stages 21. I.e., one module set includes a first linkage module 21 and a second linkage module 21, each enabling a motorized linear stage, as shown in FIGS. 13A - 13B.

The second linkage module 21 is coupled to the slider 23 of the first linkage module 21. Thus, the second linkage module can slide along the trench 108 of the first module 21 upon actuation by the motor 110 of the first linkage module, see also FIGS. 13B and 16B.

Now, the experimental module (an imaging module 40) can be coupled to the second linkage module 21, as illustrated in FIG. 3B. The imaging module 40 includes a casing 42, which encloses an image sensor 46 and a lens 41. The casing 42 is rigidly fixed to the profile of the second linkage module 21. The slider 23 of the second linkage module 21 is coupled to the image sensor 46 (e.g., via an adapter 45, see FIG. 11C), which makes it possible to change the relative distance between the image sensor 46 and the lens 41, upon actuation by the motor 110 of the second linkage module. Note, the slider 23 may equivalently be coupled to the lens 41, to achieve the same.

In detail, actuating the slider 23 of the second module 21 results in changing the distance between the image sensor 46 and the lens 41, which makes it possible to zoom in/out (i.e., change the magnification level). Still, actuating the slider 23 of the first module moves both the imaging module 40 and the second linkage module 21 it is fixed to, allowing to keep the sample 32 in focus, as illustrated in FIGS. 13A and 13B. In this setting, actuating any of the first and second motors 110 impacts both the zoom and focus. However, one has more influence on the zoom and the other on the focus. Thus, both motors need be actuated to change the zoom while keeping the target or sample 32 in focus.

The combination of the imaging module 40 with the first and the second linkage modules 21 is referred as the "imaging assembly" in the following and referred to by numeral reference 49 in the drawings, see, e.g., FIG. 13B.

### 1.2.2 XYR stage

Another module set of the instrument 1, 2 may involve three linkage modules 20, 20, 30, to enable an XYR stage. In that case, a first linkage module 20 is coupled to a second linkage module 20, itself coupled to a third linkage module 30. The first and second modules 20 are modules as described in sect. 1.1.5, while the third module is a module 30 as described in sect. 1.1.6. The experimental module is a sample holder 31, which is coupled to the shaft of the third linkage module 30, via a coupler 131, to allow the sample holder to be rotated in-plane. The third linkage module 30 is coupled to the slider element 23 of the second linkage module 20, on top thereof, to be able to slide with respect to the longitudinal direction of the profile of the second linkage module 20. The relative orientation of the second and third linkage modules 20, 30 can be as shown in FIGS. 6C - 6F (even though these figures relate to two modules 20 of the same type).

In a preferred implementation, the first linear linkage module 20 permits linear motion along the *y*-axis (reference is made to the coordinate systems shown in the drawings), while a second linear linkage module 20 is used for translation along the x-axis. The third module 30 sits on the second module 20. The linkage module 30 can notably be transversely coupled to the x-axis linkage module 20, which allows it to be conveniently aligned with the imaging assembly 49. Other scenarios can be contemplated, where the linkage module 30 is connected in parallel with the second linkage module 20, e.g., to image larger samples when the imaging assembly 49 is in an extended mode, as in FIG. 14C. In general, any combination of orientations and linkage configurations shown in FIGS. 6C - 6F can be contemplated for two or more modules for a given imaging mode and sample dimensions.

### 1.2.3 Combining module sets in a same instrument

In embodiments, the instrument 1 comprises two module sets. The first module set comprises an imaging assembly 49 as described earlier, while the second module set includes a sample holder 31. The instrument 2, which is a smaller imaging system in the embodiments, includes only the smaller version of the first set for the sake of compactness. The instrument 1 further includes a base 10, which can be regarded as a chassis, i.e., a structure supporting each module set, see FIGS. 1 - 3.

The first module set of the instrument 1 is further mounted to a link 50. The link 50 is rotatably mounted to the base 10, to be able to rotate along a circular path centred at a primary rotation axis 191, see FIGS. 15A - 18C. The pair of linkage modules 21 of the imaging assembly 49 is rotatably mounted to the link 50, to be able to rotate around a secondary rotation axis 192. The secondary rotation axis 192 is parallel to the primary rotation axis. Despite possible differences in terms of dimensions and motors, and shapes, the link 50 can be functionally similar to the linkage module described in sect. 1.1.6. Thus, the pair of linkage modules 21 of the assembly 49 can be coupled to the shaft of the link 50 via adapters 54, 55, where the shaft is rotated by the motor 160 of the link 50.

The second module set comprises the sample holder 31. As explained above, it further includes a first linkage module 20 (according to sect. 1.1.5), a second linkage module 20 (according to sect. 1.1.5), and a third linkage module 30 (according to sect. 1.1.6), making up a motorized XYR stage. The first module is designed to be fixed to the base 10. The second linkage module 20 is designed to be transversely coupled to the slider 23 of the first module 20, on top thereof, to be able to slide with respect to the longitudinal direction of the profile of the first linkage module 20. The third linkage module 30 is designed to be transversely coupled to the slider element 23 of the second linkage module 20, on top thereof, to be able to slide with respect to the longitudinal direction of the profile of the second module. Thus, the longitudinal direction of the profile of the third module 30 is perpendicular to the longitudinal direction of the profile of the second linkage module but parallel to the longitudinal direction of the profile of the first module 20. The sample holder 31 is designed to be coupled to the shaft of the third module 30. Thus, the holder 31 can be mounted on top of the third module 30 and rotated in-plane, thanks to the shaft coupled to the motor 110 of the third module 30.

As defined above, the imaging system 1 involves a motorized imaging assembly 49 that can rotate over a sample along a circular path centred at the primary axis to view the sample from different angles, i.e., for 3D imaging. The system 1 further comprises a motorized XYR stage to translate and rotate the sample 32. Interestingly, the two module sets can be arranged to keep the sample at a height that is approximately aligned with the primary axis. The secondary rotation axis (also motorized) and the linear actuator for the camera module are used to do fine adjustments (to keep the sample at the centre and in focus). By contrast, the imaging system 2 shown in FIGS. 21A and 21B relies on a single rotation axis 291; the sample is manually aligned to the axis 291 in this case.

In variants, a digital camera, a smartphone (with a camera), or other types of imaging devices, can be used in place of the imaging module 40 or the imaging assembly 49. For example, a smartphone can be connected to the link 50 via a linkage module 20, 21 so that the sample can be viewed from different angles using the camera of the smartphone, while the distance of the camera to the sample and the centre of the image can be adjusted using this linkage module 20, 21, the link 50, and the XYR stage.

### 1.2.4 Light sources

The instrument 1, 2 may include one or more light sources 60, 70, 80, 260. In embodiments, the instrument 1 notably includes a curved electric light 60 having a curvilinear illumination surface, as shown in FIGS. 19A - 20B.

The curved electric light 60 may notably include a back-lit LED matrix. In variants, it includes edge-lit LED elements. In each case, the LED source is arranged according to the curvilinear illumination surface. In particular, the curvilinear illumination surface may advantageously be profiled, at least partly, according to a cylindrical surface of a cylinder having said primary axis 191 as cylinder axis.

The curved light source 60 can be used both for reflected-light and transmitted-light imaging. In the former case, the sample is illuminated from one angle and the light reflected from the sample 32 is captured by an image sensor in the imaging assembly 49 from an opposite angle, as in FIG. 20A. Because the light source is curved, it can illuminate the sample from a range of angles, while the imaging assembly 49 is rotated along a circular path centred at the primary rotation axis 191, for tilted or 3D imaging. This way, it is not necessary to continually adjust the angle of illumination during the tilted/3D imaging. For transmitted-light imaging, the light source 60 can be placed between the base 10 and the sample holder 31, illuminating the sample 32 from bottom for transparent or translucent samples, as seen in FIG. 20B.

The dimensions of the curved light source 60 can be chosen so that it can conveniently fit under the sample holder 31, should an XYR stage be used (as in FIG. 1). Note, the curved light source 60 can be fixed to the base 10 using a ball-head adapter 61. In less preferred variants, the source 60 is placed using a standard tripod.

### 1.2.5 Final remarks

The present documents address various features of instruments 1, 2, starting with linkage modules. A further aspect of this document concerns a linkage module that is supplied as a kit of part. That is, the linkage module 20, 21, 30 still includes a profile 20p, 30p, a rotary electric motor 110, and a circuit board 25, 37, as described earlier. However, the circuit board and the motor are supplied unassembled. Thus, the user would then need to mount the PCB and the motor and then connect them, to arrive at a linkage module 20, 21, 30 as described earlier. The housing 22 may possibly be supplied unassembled too, in which case the user should first mount the housing 22 and then place and connect the motor 110. Similarly, the instrument 1, 2 may be supplied as a kit of parts.

A further aspect of this document invention concerns a curved light source 60 for an instrument 1, 2, as described above. I.e., the light source preferably includes an LED matrix or an edge-lit LEDs, where the LED source is arranged according to the curvilinear surface of the curved electric lamp, itself preferably profiled, at least partly, according to a cylindrical surface of a cylinder. Such a light source can be used in an instrument 1, 2, which at least contains a base 10, 210 to which other parts can be mounted. Additional modules 20, 21, 30 can be supplied independently, possibly as kits of parts.

The above embodiments have been succinctly described in reference to the accompanying drawings and may accommodate a number of variants. Several combinations of the above features may be contemplated. Examples are given in the next section.

### 2. Examples of applications

Simple GUIs can be connected to the microcontroller 118 of each linkage module to tune key parameters of the module and store such parameters in the memory of the microcontroller. This way, the user does not need to modify, upload, or re-upload the microcontroller firmware to change such parameters because they can be modified from the user interface, permanently stored in the memory of the microcontroller, and recalled afterwards, even after a power cycle. Calibration of the magnetic end-stop sensors can also be performed by the user, e.g., by moving the slider 23 to two end points using the touch switches 29 and recording the values of the magnetic sensors 28a, 28b at those positions, or preferably by moving the slider over an entire length of the profile once or multiple times and running an algorithm to detect the end-point values automatically from the slope of the magnetic field. Once done, all parameters can be stored in the EEPROM permanently.

In the imaging system 1, 2, each mechanical stage is motorized and programmable, allowing advanced image processing features (e.g., image stitching, focus stacking, continuous zoom with focus-lock, and object tracking) to be controlled in software. Furthermore, each stage/module knows its own linear position, rotation/tilting angle, or light intensity, where these parameters can be saved together with the image, for example as metadata. The captured images and their metadata for a given object/sample can then be uploaded to an online image sharing platform. The platform essentially includes a virtual representation of the imaging system (i.e., a digital twin) where users/viewers can recall the collection of captured and uploaded images of the sample as if they were using the real system. For example, a sample can be navigated, rotated, tilted, and magnified (e.g., optical zoom revealing microscopic features) using keystrokes, a virtual joystick on a screen or a virtual-reality headset/controller according to the metadata available for each image of the pre-recorded and uploaded collection. Because the imaging system is programmable, it can automatically capture such images according to a sequence provided by the user (e.g., automatically capturing 91 images corresponding to viewing angles from -90° to 90° with 1° increments) and then upload to the platform. Such a platform is highly beneficial for sharing a research work among peers, as well as for education, where students, for example, can visualize microscopic features of plants, insects or biological samples (recorded by other users) from a computer or smartphone screen as if they were using a real microscope.

### 3. Detailed description of the figures

In preferred embodiments, the instrument is an imaging system 1 such as shown in FIG. 1 and 2. The system includes a base 10, having trenches (or slots) 10t accepting nuts and screws and/or having an array of threaded holes. As illustrated in FIGS. 3A and 3B, various components (or modules) are to be affixed thereon, including motorized linkage modules 20, 21, 30 and a motorized imaging assembly 49 connected to the base 10 via a link 50, where the link 50 can rotate (or tilt) the imaging assembly 49 to image a sample 32 from different viewing angles. Two sets of linkage modules (or "module sets") are provided to actuate the imaging assembly 49 and the sample 32, respectively, as explained in sections 1.2.1, 1.2.2, and 1.2.3. Additionally, multiple illumination (or light) sources 60, 70, 80 are used to illuminate the sample 32 for different imaging applications, as explained in sect. 1.2.4.

The instrument 1 can be assembled in a variety of configurations thanks to its modular design (FIG. 3A). FIG. 3B depicts a very functional assembly strategy for a compact 2D/3D imaging system 1. Referring to both FIGS. 1 and 3B, the link 50 is fixed to one side of the base 10, leaving enough space and clearance on the base 10 for attaching other modules and allowing motorized movement of the sample 32 and its holder 31. A linkage module 20 (used for linear actuation of the sample 32 along *y*-axis) is connected to the base 10 at the other side. Interestingly, the linkage module 20 and the bottom illumination source 80 form a planar surface with the base 10, effectively extending the surface area of the base 10. This is particularly useful when imaging larger objects that can be placed directly on the top surface 197 of the base 10. Another linkage module 20 for *x*-axis (identical to the module used for *y-*axis) and a third linkage module 30 for rotary actuation are stacked on top of the *y*-axis linkage module 20 transversely, together forming a motorized XYR stage, see FIGS 1, 2.

The base 10 is preferably a rectangular cuboid, made out of a rigid and durable material to support the weight of all attached modules. Moreover, it can be machined, milled, or extruded, to easily form trenches 10t or holes accepting thumb screws 15a, regular screws 15b and nuts 16, which are used to fix the modules to the base 10 directly or using connection adapters, such as a right-angle adapter 13 or a straight adapter 14, as seen in FIGS. 2, 3A, and 3B.

Aluminium extrusion profiles, particularly with "T-slot" or "V-slot" trenches, are a convenient choice for building the base 10. Such profiles are available in different lengths, low-cost, and compatible with a variety of hardware components and accessories. In FIG. 3A - inset, the base 10 is a V-slot aluminium profile of 20 mm × 80 mm cross-sectional area and 250 mm length. The base 10 has trenches 10t extending along the entire base length on four sides, so that the modules or adapters 13, 14 can be fixed at different locations and in different orientations. Note, the base 10 can be shorter or longer than 250 mm. However, longer bases would increase the size of the system 1, whereas a shorter base might result in tipping over of the system 1 when the imaging assembly 49 is fully tilted, as best seen in FIG. 18C. In a more compact variant, the base 210 of the system 2 shown in FIGS. 21A and 21B can be shorter, for example 200 mm or less.

The linkage modules can easily be moved (or slid) without completely detaching them from the base 10, thanks to sliding nuts 16 that can slide through the trenches 10t; they can be fully tightened using thumb screws 15a or regular screws 15b. This is particularly interesting for an imaging system 1, 2, because the modules can be quickly reconfigured or repositioned according to the size and type of the sample 32 and the imaging techniques used. This can be done manually, without necessarily requiring a tool. As further seen in FIGS. 2, 3A and 3B, the base 10 is raised with rubber pads 11, which have several functions. First, they dampen vibrations, whether generated by the motorized modules of the imaging system 1, 2 or externally (e.g., someone touching to the table on which the imaging system sits). Second, they ensure a gap between the base 10 and the underlying surface, which makes it possible to pass electrical cables 91. Note, the cables 91 preferably have male connectors 93 on both ends; they are used to connect linkage and illumination modules to a power and signal distribution module 90 via female connectors 94. Third, the gap allows adapters, such as a straight adapter 14, and/or thumb screws 15a, to be placed at the bottom side of the base 10, as in FIG. 3A. The height of gap can for instance be of 20 mm, so that the 20 mm × 20 mm linkage modules 20, 21, 30, can be placed under the base 10, if needed. For example, the position of a thick sample can be lowered by partially inserting one of the linkage modules 20 under the base 10. For aesthetic reasons, the front and back ends of the aluminium profile (i.e., base 10) can be covered with a cover 12, as in FIG. 2. These covers 12 may have openings to insert sliding nuts 16 into the base 10 and/or notches to hold the cables 91 running between the power and signal distribution module 90 and the other modules.

In FIGS. 2 and 3A, the module 90 delivers power to all connected modules from a single power input 92 (e.g., a 5 V USB power adapter). This module 90 also relays incoming and outgoing communication data between the modules and an external host device (e.g., a smartphone, computer) via a USB, Bluetooth, or Wi-Fi connection. Although the module 90 can be located anywhere on the system, placing it underneath the link 50 is convenient because this location is more or less equidistant to all modules forming the imaging system 1 of FIGS 1 - 3B, so that cables 91 of same lengths can be used for all modules. The various modules can be electrically connected using techniques known from similar multi-module systems. Typically, in prior art systems, a master PCB (with a single microcontroller) controls electronic and/or electro-mechanical components of each linkage module and processes analogue or digital data coming from the sensors of the modules. On the contrary, preferred embodiments rely on linkage modules that have, each, a respective PCB, which includes a dedicated microcontroller that runs independently from the other PCB microcontrollers.

Referring now to FIGS. 7B, 10B, 15B, the microcontroller 118 receives serial commands via the electrical port 94 and then accordingly generates signals to actuate a rotary motor 110, 160, via a motor driving circuit 116. Additionally, the microcontroller 118 reads signals from the touch switches 29 as well as the position or angle sensors 28, 38, 153 and drives an LED indicator 95, which provides visual feedback about the status of each module. Advantageously, the present systems 1, 2 can accept as many modules as needed without specific assignments for cables or signals. On the contrary, prior systems require to redesign the master board and its firmware every time the system or any module thereof is reconfigured or repurposed. In addition, the present approach allows communications with modules using only three wires, i.e., for power (e.g., 5 V), ground, and data. This is a substantial simplification for the cables 91 and connectors 93, 94, which otherwise require tens of wires (or terminals) for each module, should it include a motor, LEDs, touch switches, and sensors.

Furthermore, a module with a dedicated microcontroller can work independently by directly connecting it to a host device (e.g., a computer or a smartphone) or a power source. Multiple modules can be connected to the same power and signal wires, so that a command issued by the host device and/or a connected controller 100 (e.g., a joystick) is received by every modules. Now, this command may include a single module ID, such that only the relevant module (which is assigned this ID) responds. This is another simplification for the assignment and arrangement of the cables 91. For example, the host device connected to the module 90 sends a serial command < *X,* 10, 5 > to all modules using the same "data" wire relayed by the cables 91, but only the microcontroller of the module assigned the ID *X* responds, e.g., by actuating the respective motor 110 to generate a linear movement of 10 mm at a speed of 5 mm/s. Note, multiple commands could be sent simultaneously (e.g., in a same instruction line), where each command targets a respective ID, should multiple modules be concurrently actuated.

In embodiments, each module runs a simple user interface to assign and change the ID, and tune the basic parameters of the module (e.g., sensor calibration data) from the host device. In variants, a small display (e.g., an OLED display) is included in the module to change the parameters using touch switches 29 without requiring a host device. Moreover, each module keeps track of its own status (e.g., actuator position, LED intensity), saves the information to the EEPROM of the microcontroller 118, and sends such information back to the host device when requested. For instance, an image captured by the imaging system 1, 2 can include all parameters of the modules as metadata recorded together with the image (see sect. 2). In embodiments, the module 90 also includes a touch switch 90b to turn the imaging system 1, 2 on and off. The switch 90b further sends a command to all modules so that they save their status before power is cut off. When turned on, all modules resume from their latest status. The illumination modules 60, 70, 80 use the same circuit and communication principles as the motorized linkage modules 20, 21, 30 and the link 50; instead of motors, LEDs are driven using a dedicated PCB.

The linkage module 20, 21 shown in FIG. 4A - 4E is a linear actuator driven by a rotary motor 110 and a mechanism to translate the rotary movement of the motor 110 to linear movement of a slider 23. This is achieved using a timing belt 24, a timing pulley 111 connected to the shaft of the motor 110, and an idler pulley 112. This actuation mechanism is enclosed by a rigid structure comprising a motor housing 22 and a profile 20p. The profile 20p is a cuboid with four distinct trenches (i.e., grooves or slots) extending along the four longitudinal sides S1 - S4 (FIG. 4A - inset). The first trench 108 houses and guides the slider 23 driven by the actuation mechanism, hence forming a motorized slider joint. Another trench 107 receives a PCB 25 with electronic components. The other two trenches 105, 106, which preferably are on two contiguous sides, are used to insert a combination of sliding nuts 16 and thumb screws 15a, forming additional (but manual) slider joints (FIGS. 6A and 6B) to connect multiple modules to each other in different orientations and configurations, as best seen in FIGS. 6C - 6F. Note, the trenches may substantially extend over the entire length of the profile 20p. Preferably, a residual space of 5 to 10 mm is provided at the lateral end L2 of the profile 20p, to preserve mechanical strength. The profile 20p and the motor housing 22 may be for instance made of hard plastic, which is 3D-printed or injection-moulded as a single piece. In variants, they are manufactured separately and later combined. In this case, one may for example use extruded and/or machined aluminium profiles to obtain the profile 22p and rely on a plastic casing for the housing 22.

FIG. 4B depicts the dimensions of the linkage module 20, 21. The total length of the linkage module 20, 21 is 70 mm longer than the total travel distance of the slider 23. The linkage module 20 has a total length of 140 mm, allowing 70 mm travel distance for the slider 23, whereas the linkage module 21 has a total length of 190 mm for a travel distance of 120 mm.

This extra 70 mm is due to: the 20 mm side length of the motor housing 22 (enclosing the motor 110 and the timing pulley 111), 30 mm length of the slider 23, and an additional 20 mm to cover the idler pulley 112. In variants, the sections on both ends of the module 20, 21 can be slightly longer or shorter depending on the type of motor and pulleys used. Still, different lengths can be achieved by elongating the profile 20p, and thus the portion where the slider 23 travels, while other dimensions can remain the same. One may for example use a 500 mm long linkage module for linear actuation, allowing a 430 mm travel distance for the slider 23. The profile 20p and the housing 22 preferably have a square cross-section. Note, one can enlarge the cross-sectional dimensions to, e.g., 30 mm × 30 mm or 40 mm × 40 mm by keeping the same design principle and aspect ratio, to accommodate a larger motor with a higher torque. Such dimensions (including the 20 mm × 20 mm profiles) are compatible with standard aluminium profiles and their accessories.

In embodiments, two or more linkage modules are linked to each other via adapters 17, 18, 300, 301, 302, which mate with the slider (FIG. 5A), forming a slider joint. A cross-connection adapter 17 can be used for a transverse linkage (FIGS. 6C and 6D), a vertical-connection adapter 300 for vertical connection (FIG. 6F), while a parallel-connection adapter 18 is used for a parallel linkage of modules 20, 21, 30 using thumb screws 15a (FIGS. 6E, 13A). In variants, other types of adapters can be used, e.g., a thumb-driven-nut adapter 301 or a magnetic snap adapter 302 (FIG. 5B).

The linkage modules 20, 21 include end-stop switches (or sensors) as a feedback mechanism to stop the motor when the slider 23 reaches the lateral ends. Otherwise, forcing a movement beyond its physical limit may result in a mechanical or electrical damage. A feedback mechanism is also useful to estimate the absolute position of the slider 23, especially when the motor 110 is a stepper motor. For example, the position of the slider 23 can be calculated from the number of steps that the motor takes from the lateral ends as a reference position. However, mechanical or optical switches are typically large and may exhibit hysteresis, let alone long-term fatigue of mechanical switches. Instead, preferred embodiments rely on a pair of magnets 27 that are concealed inside the slider 23; analogue hall-effect sensors 28 are located on the PCB 25 to estimate the physical limits, and consequently the position of the slider 23, as in FIGS. 4C and 4D.

In more detail, two analogue hall-effect sensors 28a, 28b, located on two sides of the PCB 25, produce two distinct sinusoidal waves while the slider 23 with integrated magnets 27 travel from one end to the other (FIGS. 4D, 4E). Preferably, the sensors 28a, 28b are placed 5 to 25 mm apart from the lateral (small) sides of the PCB 25 and 20 to 50 mm apart from each other. The microcontroller 118 then processes the data and decides when to stop the motor, which corresponds to a zero value of the slope of the wave for a given time and direction.

The assembly of the linkage modules 20, 21 and their operation are detailed in FIGS. 7A, 7B, and 8A - 8C. The slider 23 preferably includes guiding elements or bearings matched to rails or further trenches patterned inside the trench 108 for a smooth and reliable movement. Preferably, however, a commercially-available linear rail 120 and linear guide carriage 121 are used to simplify the design and minimize the cost of the profile 20p and the slider 23. The linear rail 120 (with its carriage 121) is fixed inside the trench 108 using screws (not shown). Next, two block magnets 27a, 27b, each preferably of 2 × 3 × 10 mm³, are inserted into the slider 23, forming an S-N (or N-S) magnetic field for position or end-stop sensing, as explained earlier (FIG. 8C). The slider 23 is then fixed to the linear guide carriage 121 using another set of screws (not shown). Different types of linear rail and carriage systems are known. Preferred is to use a rail 120 with a width of 5 mm and a carriage 121 with a width of 12 mm and a length of 20 mm, for compactness. Variants can be designed to carry heavier samples or objects, which will typically involve larger rail, carriage systems, and profiles, as well as more powerful motors.

The timing belt 24 is introduced in its respective trenches 106, 108, looping around the profile 20p via the timing pulley 111 and the idler pulley 112, to translate rotary movement to a linear actuation of the slider 23. The ends of the belt 24 are inserted through the slider 23 (as seen in FIGS. 5A and 8A), tightened, and secured using two standoff spacers (or pins) 124 inserted in the slider 23 from its sides (FIGS. 7A, 8A). The slider 23 has notches 122 (FIG. 8B) holding the belt 24 when the standoff spacers 124 are inserted. The ends of the belt on two sides are then looped back and fixed to the slider 23 using another set of notches 123, so that the adapters 17, 18, 300 can be inserted without being obstructed by the belt 24. The standoff spacers 124 are threaded, accepting for example M2-sized screws 101, so that the adapters can be tightened to the slider 23 using four screws 101 and easily replaced. After assembling the linear actuation mechanism, a cover 26 is inserted into the motor housing 22 to fix the motor and fully close the body of the module. Air ventilation holes 26a (FIG. 4A), concealed inside the cover 26, ease the passive cooling of the motor 110.

The linkage module 30 is used to rotate the sample 32, as seen in FIGS. 9A - 9D, 10A, and 10B. The core features of the module 30 remain identical to those of modules 20 and 21, to minimize the engineering and manufacturing costs and favour inter-compatibility between the modules. The motor housing 33 and the profile 30p have a T shape, which allows a further module to be linked on any side of the profile 30p, without obstructing movement of this further module, while keeping the sample 32 aligned with the primary rotation axis 191 of the link 50 (FIG. 16E). Contrary to the linkage modules 20, 21, however, no belt is required in the linkage module 30, although variants may include gear- or belt-driven mechanisms to change the speed/torque and/or axis of rotation, if needed.

In embodiments as shown in FIGS. 9A - 9D, the motor 110 is directly coupled to a flanged coupler 131, itself connecting to a replaceable sample holder 31. A variety of sample holders can be designed, depending on the type and size of samples (or objects), and fixed to the coupler 131, e.g., using a screw 15b. The sample holder 31 seen in FIGS. 9B, 9D has sample holding clips 36 to hold a sample 32, a standard glass slide sample in this example. The holder 31 also has an opening so that it can be used for both reflected-light and transmitted-light imaging of the sample 32. The PCB 37 of the linkage module 30 is almost identical to that of the linkage module 20. Yet, PCB 37 has an angle (or rotation) sensor 38 to continuously track the position of the shaft of the motor 110. The PCB 37 is conformally placed against cavities 35 of the profile 30p. In all the motorized linkage modules 20, 21, 30 shown in the drawings, the terminals of the motor 110 are connected to the PCB via a connector 115, where the connector is preferably placed at the lateral (small) edge of the board 25, 37. The extra length of the motor cable 114 is stored inside the motor housing 22, 33, in order to mitigate motor signals coupling to the rest of the electronics. Furthermore, the PCB 25, 37 may include markings forming patterns for camera calibration 133 and a distance indicator 119 (i.e., a ruler) on its exposed side Sₑ.

The imaging systems 1 comprises an imaging assembly 49 allowing motorized focus and magnification adjustments. Typically, a digital imaging system, such as a microscope, uses an objective lens that focuses the light reflected from or passed through a sample onto an image sensor. The magnification level and the focus can be adjusted by changing the distances between the objective lens and the image sensor, and the sample and the objective lens, respectively. Advanced systems use complex optical configurations to keep the object always in focus for different magnification levels, but this results in a bulky and expensive system. Simpler is to enclose a single objective lens and an image sensor in a housing, where the magnification is adjusted by moving either the lens or the image sensor with respect to each other. Next, the housing (including the image sensor and the objective lens) can be moved, as a whole, to keep the sample in focus for a given magnification level. Despite its simplicity, the main disadvantage of such an implementation is the precise manipulation required for focus adjustments, something that is difficult to do manually, especially for higher magnification levels. Therefore, in preferred embodiments such as illustrated in FIGS. 11A - 11C and 13A - 13B, the imaging module 40 is linked to a motorized linkage module 21 to linearly actuate an image sensor 46 with respect to the objective lens 41 at a precision less than 100 µm, and preferably less than 20 µm. In variants, the objective lens 41 is moved while fixing the image sensor 46. This, however, requires a housing that may hinder the illumination of the sample in certain imaging conditions (e.g., when the lens 41 is close to the sensor 46). The image sensor 46 is linked to the slider 23 of a linkage module 21 via a right-angle adapter 45. A flexible cable 48 is preferred to electrically connect the image sensor 46 to an electrical port 96 (e.g., a USB-C socket) either directly or via a signal processing board 47, depending on the type of sensor. An opaque casing 42 with a back cover 43 is fixed to the linkage module using screws, preventing stray illumination of the image sensor 46 from the ambient light or from illumination modules 60, 70, 80.

Two particular features of the imaging module 40 enhance the modularity of the imaging system 1, 2. First, the objective lens 41 is easily replaceable thanks to studs 141 fixed to the housing 42 and a lens adapter 44 having holes mating with the studs. Note, the conduits 142, having a slanted (sloped) profile, are placed 10 mm to 20 mm far from the front side of the housing 42 so that they do not cast shadow on the sample 32, particularly during reflected-light imaging. For the same reason, the main imaging axis 190 of the sensor 46 is placed as close as possible to the top side of the housing 42.

The interchangeability of the lens and the insertion of optical components are further detailed in FIGS. 12A - 12D. Specifically, each of the lens adapter 44, the side conduits 142, and the optical components 70, 75 comprises spring plunger screws 143, which are used to hold these components on parallel standoff rods 144. The optical components 70, 75 can easily be manually moved (i.e., slid along the rods 144), removed, and replaced, if necessary. Once in position, they can be fixed to the rods 144 thanks to spring plunger screws 143. (FIGS. 12A, 12B). For example, a ring light source 70 with individually-addressable LEDs 71 and optionally a light diffuser 75 can be inserted to illuminate the sample 32 directly from the imaging axis 190. Multiple optical components (e.g., filters, lenses, diffusers) can be stacked and their relative distances can be adjusted, as best seen in FIG. 12D.

In variants where a more compact instrument 2 (FIGS. 21A, 21B) is desired, a shorter housing 242, and thus a shorter imaging module 240 (160 mm instead of 210 mm for the module 40) can be linked to shorter linkage modules 20, resulting in a less range for magnification. In other variants, a filter (or multiple filters) can be inserted between the objective lens 41 and the image sensor 46, for example to perform fluorescence imaging or to reject undesired wavelengths (e.g., infrared light).

The connection of the imaging module 40 with a linkage module 21 is shown in FIG. 13A. The imaging assembly 49 shown in FIG. 13B can be held by hand for a quick optical inspection of the sample 32, or attached to a rigid surface or a support, while the magnification and the focus are adjusted using touch switches 29, a host device, or a joystick controller 100. As mentioned earlier, the imaging assembly 49 is connected to the base 10 via a link 50 for 2D/3D imaging.

Referring now to FIGS. 14A - 14C, two adapters 54, 55 are included in the link 50 to fix the imaging assembly 49 using thumb screws 15a. Advantageously, the imaging assembly 49 can be connected to the link 50 in different orientations thanks to the availability of two slider joints that can be formed on two distinct trenches 105, 106, respectively. For example, the imaging assembly 49 can be connected to the link 50 via a first adapter 54 from the fourth side S4 (see FIG. 4A) of the linkage module 21 (see FIG. 14B). Alternatively, the imaging assembly 49 can be rotated 90° with respect to its longitudinal axis and secured to the link 50 via a second adapter 55 from the second side S2 of the first linkage module 21 (see FIG. 14C). The latter configuration can for example be used for imaging larger samples because it increases the distance between the imaging axis 190 and the link 50. In both cases, the imaging axis 190 is aligned with the tilting axis of the link 50 thanks to an arm 56 connecting the adapters 54, 55. The length of the arm is adjusted in accordance with dimensions of the imaging assembly 49, as seen in FIGS. 17A, 17B, and as further explained later.

The following focuses on tilted/3D imaging. FIGS. 15A and 15B show exploded 3D views of the link 50, which comprises two rotation axes: a primary axis 191 and a secondary axis 192, controlled by two mechanisms 51, 52, respectively. Each tilting mechanism 51, 52 uses a high-torque gear motor 160, a speed reduction mechanism 157, 158 to further increase the torque (and lower the speed, for example at a 1:2 ratio), and an angle sensor 153, which is located on respective boards 151, 152, and aligned with the primary axis 191 and the secondary axis 192, respectively. Note, the motor 160 is preferably rated at least 10 kg.cm torque and 1 rpm speed for a smooth and reliable operation. The speed of the motor 160 can be adjusted electrically using pulse-width-modulation or other known techniques. Housings 58, 59 respectively enclose the mechanisms 51, 52. An aluminium profile 53, e.g., having a length of 150 to 200 mm, is used to connect the mechanisms 51, 52. Preferably, a spring 159 is used to smoothen movement when the profile 53 (and thus the secondary axis mechanism 52) is rotated around the primary axis 191. Importantly, the orientations of the motors 160, the dimensions of the housings 58, 59, and the length of the profile 53, are jointly designed so that the components do not collide and leave sufficient clearance (e.g., a few mm). This especially useful when the profile 53 and the secondary axis mechanism 52, and eventually the imaging assembly 49, are fully rotated CW or CCW (see FIG. 18A - 18C). A PCB 57, covering one side of the mechanisms 51, 52, is used to control the motors 160 and readout angle sensors 153. The PCB 57 has also touch switches 29 and use the same design principles as other PCBs 25, 37. In preferred embodiments, the measurement of the tilting angle uses magnetic angle sensors 153 and diametrically-magnetized magnets 155, which are connected to the screws acting as pivot points for the rotation axes 191, 192. The movement of the primary rotation axis 191 is limited to a range between -90° and 90° (FIGS. 18A, 18B), whereas the secondary rotation axis can rotate freely (i.e., 360°). When the imaging assembly 49 is connected to the link 50, both axes 191, 192 can be used to view a microscopic sample or a macro-object from a wide range of angles, as illustrated in FIGS. 19A - 19E.

The following discusses the imaging modes. As depicted in FIGS. 16A and 16C, the manipulated object 32 should ideally be located where the imaging axis 190 and the primary axis 191 coincide (point of interest 193). This allows a continuous tilted imaging by simply tilting the imaging assembly 49 around the primary rotation axis 191. A few design constraints can be contemplated to keep the sample at the ideal point of interest 193. For example, the height 198 of the primary axis 191 with respect to the top surface 197 of the base 10 matches the length 196 of the arm 56 and the distance 195 between the imaging axis 190 and the bottom surface of the second linkage module 21 of the imaging assembly 49, see FIGS. 13B, 17A, and 17B. The dimensions 195, 196, 198 are preferably between 50 mm and 100 mm, and more preferably close to 75 mm, given the preferred dimensions of the modules evoked earlier. Furthermore, the total height of the XYR stage also matches the dimensions 195, 196, 198, so that the sample 32 is aligned with the primary axis 191, as seen in FIG. 18C. Accordingly, and as depicted in FIGS. 19A, 19D, and 19E, a specific location of the sample 32 can be imaged from a range of viewing angles (i.e., -90° to 90°) by tilting the imaging assembly 49 from one end to the other, around the primary rotation axis 191, while keeping the point of interest centred and focused. If needed, fine positioning of the sample 32 in the plane (*x, y*) can be done using the XYR stage (FIG. 16E).

The sample 32 can for instance be a glass slide, a microfluidic device, or a semiconductor chip. However, not all microscopy or macro photography applications deal with such small and thin samples or substrates. For example, in applications, the sample could be a large (e.g., 6-inch) semiconductor wafer, an object, a plant, or an insect, to name a few. In this case, it is difficult, if not impossible, to align the object or its feature with the point of interest 193. Given that the sample 32 can be now located at another point of interest 194 because of its size, which is off-centred with respect to the axes 190, 191, as depicted in FIG. 16B, the imaging module 1 of the embodiments can still image the sample from different viewing angles while keeping the point of interest 194 at the centre of the image. This is achieved by tilting the imaging assembly 49 around both the primary axis 191 and the secondary axis 192 of the link 50, and simultaneously changing the distance of the objective lens 41 to the sample 32, to keep the point of interest 194 centred and focused, as illustrated in FIG. 16D. The imaging system 2 (FIGS. 21A, 21B) uses a similar principle for tilted imaging, yet a manual adjustment of the height alignment is relied on, to reduce the complexity of the system. In the system 2, the rotation axis 291 is moved up and down by moving the rotation mechanism 250 and its PCB 220 to align the rotation (or tilting) axis 291 with the point of interest of the sample. Alternatively, this height adjustment can be done using a motorized linkage module 20, 21, as a z-axis position control for the sample, instead of moving the whole tilting mechanism.

The following discusses additional features of the imaging system 1, 2, related to the illumination of the sample 32. The systems 1, 2 can take upright (2D) images of the sample 32 by illuminating it from the top using a ring light source 70 or from the bottom using a bottom light source 80, 260. The bottom source 80 can be used without an XYR stage by directly placing the sample on top of the source 80, which is co-planar with the base 10. Alternatively, the light source 80 can be raised to get closer to the sample 32 when the sample is actuated by the XYR stage (FIG. 20A). Preferably, said source comprises two parts linked with a spring (not shown) so that it does not obstruct the movement of the stages, for example when the XYR stage accidentally collides with the light source 80.

Conversely, the tilted/3D imaging uses a curved light source 60, comprising a matrix of LEDs (e.g., a 16 × 10 matrix) and a diffuser film 62. The source 60 is fixed to the base using a ball-head adapter 61. For example, the light source 60 can be placed over the XYR stage, as seen in FIG. 20A, to illuminate the sample 32 from a range of angles and image it from the opposite angle (i.e., reflected-light imaging). Alternatively, the source 60 can be placed under the XYR stage (FIG. 20B) to achieve a similar effect in transmitted-light imaging of transparent or translucent samples. Cross-section inspection or water contact-angle measurements can also be done using the same light source 60 as shown in FIG. 18C. Note, some applications and imaging modes may require two or more light sources simultaneously.

In variants, the XYR stage can be detached from the base 10 and placed elsewhere, e.g., for imaging larger samples from a longer distance. In this case, a separate illumination source can used, e.g., a light box or a photography studio lighting can be used. Note, the system can also be used as a motorized webcam or a telescope without necessarily requiring a dedicated illumination source by simply using an appropriate objective lens and adjusting the imaging angle accordingly, as can be seen in FIGS. 19B and 19C.

While the present invention has merely been described with reference to an imaging system 1, 2, the modules described herein can be re-purposed for other applications, e.g., where precise manipulation or illumination is required. For example, the present linkage modules can be connected to an optical table and used as distinct modules to manipulate optical elements. As another example, the linkage modules 20, 21 can be turned into a fluidic pump by attaching a syringe and pressing it using a slider 23. Furthermore, the imaging system 1 can easily be turned into a pipetting robot by simply replacing the camera module 40 with a pipetting tool; the sample is typically a vial or a titter plate in that case. Similarly, a pick-and-place tool can be achieved using the same linkage modules but replacing the imaging assembly 49 by a pick-and-place head.

**REFERENCE LIST**

| | | | |
|---|---|---|---|
| 1 | Laboratory instrument | 37 | Circuit board of rotary stage |
| 2 | Laboratory instrument (variant) | 38 | Angle sensor |
| 10 | Base of laboratory instrument 1 | 40 | Imaging module |
| 10t | Trenches | 41 | Objective lens |
| 11 | Rubber pads | 42 | Opaque casing |
| 12 | Cover | 43 | Back cover |
| 13 | Right-angle adapter | 44 | Lens adapter |
| 14 | Straight adapter | 45 | Right-angle adapter |
| 15a | Thumb screw | 46 | Image sensor |
| 15b | Regular screw | 47 | Signal processing board |
| 16 | Sliding nut | 48 | Flexible cable |
| 17 | Cross-connection adapter | 49 | Imaging assembly |
| 18 | Parallel-connection adapter | 50 | Link |
| 20 | Linkage module (linear stage - shorter version) | 51 | Primary rotation mechanism |
| | | 52 | Secondary rotation mechanism |
| 20p | Profile of linear stage | 53 | Aluminium profile |
| 21 | Linkage module (linear stage - longer version) | 54 | First adapter |
| | | 55 | Second adapter |
| 22 | Motor housing of linear stage | 56 | Arm |
| 23 | Sliding element (slider) | 57 | Circuit board |
| 24 | Timing belt | 58 | Housing for primary axis |
| 25 | Circuit board of linear stage | 59 | Housing for secondary axis |
| 26 | Cover | 60 | Curved electric light source |
| 26a | Air ventilation holes | 61 | Ball-head adapter |
| 27 | Magnets | 62 | Diffuser film |
| 28 | Hall-effect (or magnetic) sensors | 70 | Ring light source |
| 29 | Touch-sensitive switches | 71 | Individually-addressable LEDs |
| 30 | Linkage module (rotary stage) | 75 | Light diffuser |
| 30p | Profile of rotary stage | 80 | Bottom light source |
| 31 | Sample holder | 90 | Power and signal distribution module |
| 32 | Sample | 90b | Touch switch (power control) |
| 33 | Motor housing of rotary stage | 91 | Electrical cable |
| 34a | Trench on fourth side S4 of profile 30p | 92 | Power input |
| | | 93 | Mating connector of cable 91 |
| 34b | Trench on first side S1 of profile 30p | 94 | PCB electrical port |
| 34c | Trench on second side S2 of profile 30p | 95 | LED indicator |
| | | 96 | Electrical port of camera module |
| 35 | Trench on third side S3 of profile 30p | 100 | Controller |
| 36 | Sample holding clips | 101 | M2-sized screws |
| 105 | Trench on second side S2 of profile 20p | 152 | Circuit board |
| | | 153 | Angle sensor of link 50 |
| 106 | Trench on fourth side S4 of profile 20p | 155 | Diametrically-magnetized magnet |
| | | 157 | Speed reduction mechanism |
| 107 | Trench on third side S3 of profile 20p | 158 | Speed reduction mechanism |
| 108 | Trench on first side S1 of profile 20p | 159 | Spring |
| 110 | Rotary electric motor | 160 | Rotary electric motor of link 50 |
| 111 | Timing pulley | 190 | Main imaging axis |
| 112 | Idler pulley | 191 | Primary rotation axis |
| 114 | Motor's electrical cable | 192 | Secondary rotation axis |
| 115 | Connector | 193 | Point-of-interest |
| 116 | Motor driving circuit | 194 | Point-of-interest |
| 118 | Microcontroller | 195 | Distance |
| 119 | Distance indicator | 196 | Length of arm 56 |
| 120 | Linear rail | 197 | Surface of base |
| 121 | Linear guide carriage | 198 | Height |
| 122 | Notch | 210 | Base of laboratory instrument 2 |
| 123 | Notch | 220 | Circuit board |
| 124 | Standoff spacers | 240 | Imaging module |
| 131 | Flanged coupler | 242 | Housing |
| 133 | Patterns for camera calibration | 250 | Rotation mechanism |
| 141 | Studs | 260 | Light source of instrument 2 |
| 142 | Side conduits | 291 | Rotation axis |
| 143 | Spring plunger screws | 300 | Vertical-connection adapter |
| 144 | Standoff rods | 301 | Thumb-driven-nut adapter |
| 151 | Circuit board | 302 | Magnetic snap adapter |

## Claims

1. A linkage module (20, 21, 30) for a laboratory instrument (1, 2), wherein the linkage module (20, 21, 30) includes:
a profile (20p, 30p) having two lateral ends (L1, L2) and four longitudinal sides (S1 - S4), the latter including a first side (S1), a second side (S2), and a third side (S3), wherein
the four longitudinal sides extend between the two lateral ends,
the profile (20p, 30p) is structured to have a first trench (108, 34b) on the first side (S1), a second trench (105, 106, 34a, 34c) on the second side (S2), and one or more cavities (107, 35) on the third side (S3), and
the first trench (108, 34b) and the second trench (105, 106, 34a, 34c) form two linear guiding elements designed to enable two slider joints, respectively;
a rotary electric motor (110) fixed at one of the two lateral ends (L1, L2) of the profile (20p, 30p); and
a circuit board (25, 37) fixed to the profile (20p, 30p), on the third side (S3) thereof, whereby a concealed side (Sc) of the circuit board faces the one or more cavities (107, 35), wherein
the circuit board (25, 37) includes a circuit designed to control the rotary electric motor (110), in operation, and
the circuit includes electronic components that are arranged on the concealed side (Sc) of the circuit board (25, 37) and housed inside the one or more cavities (107, 35).

2. The linkage module (20, 21, 30) according to claim **1,** wherein the circuit board (25, 37)
extends over most of an entire length of the profile (20p, 30p), preferably over substantially the entire length of the profile (20p, 30p),
is dimensioned to fit within a surface spanned by the third side (S3) of the profile, and
is arranged so as not to protrude from the profile (20p, 30p) along any direction in-plane with this surface.

3. The linkage module (20, 21, 30) according to claim **1** or **2,** wherein
the circuit board (25, 37) further includes an electrical port (94) designed to be connected by a mating connector (93) of a cable (91), the electrical port (94) connected to one or more of the electronic components to allow the rotary electric motor (110) to be externally actuated via the circuit board (25, 37), thanks to external signals received from the mating connector (93) through said electrical port (94),
preferably, the electrical port (94) is a circular female socket such as an audio jack socket, to allow the cable (91) and the mating connector (93) to freely rotate with respect to each other, and
more preferably, the input port (94) is located at a distal end of the circuit board (25, 37), opposite to a proximal end of the circuit board (25, 37), which is closest to the rotary electric motor (110).

4. The linkage module (20, 21, 30) according to claim **3,** wherein
the electronic components include one or more sensors,
said circuit is adapted to transmit signals produced by the one or more sensors to the electrical port (94),
the one or more sensors preferably include one of
an angle sensor, and
one or two magnetic end-stop sensors, and.
said circuit preferably includes a driving circuit designed to drive the rotary electric motor.

5. The linkage module (20, 21, 30) according to any one of claims **1** to **4,**
wherein
the electronic components include a microcontroller (118), which is arranged on the concealed side (Sc) of the circuit board (25, 37),
the microcontroller (118) is connected to at least one of the electronic components, the microcontroller includes a programmable, non-volatile memory, which is preferably an electrically erasable programmable read-only memory, and
the microcontroller is configured to connect to an external device, such as a device enabling a graphical user interface, to receive signals from the external device and accordingly program the programmable, non-volatile memory, for it to store a unique digital identifier and calibration parameters,
and wherein, preferably,
the circuit board (25, 37) further includes user-actuatable switches (29a and 29b), which are preferably touch switches,
the user-actuatable switches are arranged on an exposed side (Se) of the circuit board, and
the user-actuatable switches (29a and 29b) are connected to said microcontroller (118) to allow the rotary electric motor (110) to be directly actuated by a user via the user-actuatable switches (29) and the microcontroller (118).

6. The linkage module (20, 21, 30) according to any one of claims **1** to **5,** wherein
the linkage module (20, 21, 30) further comprises a housing (22, 33) having essentially same cross-sectional dimensions as the profile (20, 30p),
the housing (22, 33) extends at right angle from one of the two lateral ends of the profile (20p, 30p), whereby the profile and the housing together have an L shape or T shape, and the rotary electric motor is arranged in the housing (22, 23).

7. The linkage module (20, 21) according to any one of claims **1** to **6,** wherein
the profile (20p, 30p) further includes a timing belt (24) and a sliding element (23),
the timing belt (24) is arranged in the profile to at least pass through the first trench (108),
the sliding element (23) is secured to the timing belt and designed to cooperate with the linear guiding element formed by the first trench (108),
the rotary electric motor (110) is coupled to the timing belt (24) to actuate the sliding element (23) and make it slide in the first trench (108), in operation,
preferably, the timing belt (24) is arranged in the profile to pass through a fourth trench (106) structured on a fourth side (S4) of the four longitudinal sides, the fourth side opposite to the first side, for the timing belt (24) to loop through each of the first trench (108) and the fourth trench (106), in operation,
the sliding element (23) preferably includes one or more magnets (27), more preferably permanent magnets, the magnets (27) forming two opposing poles arranged parallel to a longitudinal direction of the profile (20p),
preferably, the circuit board (25) further includes one or two end-stop sensors (28a, 28b), wherein each of the end-stop sensors is adapted to sense a magnetic field generated by the one or more magnets (27), in operation, and
preferably, the electronic components further form a detection circuit designed to detect one or two end points of the sliding element (23) based on a derivative of the sensed magnetic field and accordingly stop the rotary electric motor (110).

8. The linkage module (20, 21) according to claim 7, wherein
the linkage module further comprises an adapter (17, 18), which is fixed to the sliding element (23),
the adapter (17, 18) is designed to allow a further linkage module (20, 21, 30) to be fixed to the adapter, whereby said further linkage module (20, 21, 30) can slide along the first trench (108) of the linkage module (20, 21) upon actuating the rotary motor (110), in operation,
said further module (20, 21, 30) is a linkage module according to any one of claims **1** to **7,** and
said adapter (17, 18) is, preferably, further designed to constrain an orientation of the further linkage module with respect to the linkage module upon fixing the further linkage module (20, 21, 30) to the adapter, said adapter (17, 18) being more preferably shaped to allow the respective profiles of the linkage module and the further linkage module to extend either parallel or perpendicularly to each other.

9. The linkage module (30) according to any one of claims **1** to **6,** wherein
the linkage module (30) further includes a shaft extending perpendicularly to a longitudinal direction of the profile (20p, 30p) and a coupler (131) arranged to allow it to be coupled with an external element (32), the coupler (131) rotatable around an axis that is perpendicular to the third side (S3),
the rotary electric motor (110) is coupled to the shaft and configured to rotate the shaft, to rotate the coupler (131), and
preferably includes an angle sensor configured to measure an angle of the shaft.

10. The linkage module (20, 21, 30) according to any one of claims **1** to **9,** wherein
a length of the profile (20p, 30p), as measured along a longitudinal direction that is parallel to the four longitudinal sides (S1 - S4), is between 40 and 300 mm, while an average width of the profile, as measured perpendicularly to said longitudinal direction, is between 10 mm and 50 mm.

11. A laboratory instrument (1, 2), wherein
the laboratory instrument (1, 2) comprises one or more sets of modules, each of the sets including two linkage modules (20, 21, 30), each according to one of claim **1** to **10,** and
in each of the one or more sets of modules, the two linkage modules (20, 21, 30) are mechanically coupled to each other to form a linkage allowing relative motion of the two linkage modules upon actuating at least one of the respective rotary electric motors (110).

12. The laboratory instrument (1, 2) according to claim **11,** wherein
a given set of the one or more sets of modules further includes an experimental module (31, 40), in addition to its two linkage modules (20, 21, 30),
the experimental module (31, 40) includes a movable part and is mechanically coupled to one of the two linkage modules (20, 21, 30) of said given set to form a linkage allowing relative motion of said movable part with respect to one or each of the two linkage modules of said given set upon actuating the rotary electric motor of one or each of the two linkage modules, and
preferably, the experimental module (31, 40) is one of an imaging module (40) and a sample holder (31).

13. The laboratory instrument (1, 2) according to claim **12,** wherein:
the two linkage modules of the given set consist of a first linkage module (20, 21) and a second linkage module (20, 21), each according to claim **7** or **8,** and
the second linkage module (20, 21) is coupled to the slider element (23) of the first linkage module, whereby the second linkage module can slide along the first trench (108) of the first module upon actuation by the rotary electric motor (110) of the first linkage module.

14. The laboratory instrument (1, 2) according to claim **13,** wherein
said experimental module (31, 40) is an imaging module (40), which further comprises a casing (42), as well as an image sensor (46) and a lens (41) that are enclosed in the casing (42),
the casing (42) is rigidly fixed to the profile (20p, 30p) of the second linkage module, and
the slider element of the second linkage module is coupled to one of the image sensor (46) and the lens (41), to allow a relative distance between the image sensor (46) and the lens (41) to be changed upon actuation by the rotary electric motor (110) of the second linkage module.

15. The laboratory instrument (1) according to claim **13,** wherein
the second linkage module is a linkage module (30) according to claim **9,**
said experimental module is a sample holder (31), which is coupled to the shaft of the second linkage module (30), via a coupler (131), to allow the sample holder to be rotated in-plane,
the second linkage module (30) is coupled to the slider element of the first linkage module (20), on top of the first linkage module, to be able to slide with respect to a longitudinal direction of the profile of the first linkage module (30).

16. The laboratory instrument (1, 2) according to claim **13,** wherein
the laboratory instrument (1, 2) further comprises a base (10),
a link (50) is rotatably mounted to the base (10), to be able to rotate along a circular path centred at a primary rotation axis (191),
the pair of linkage modules is rotatably mounted to the link (50), to be able to rotate around a secondary rotation axis (192) that is parallel to the primary rotation axis, and
the link is preferably a linkage module according to claim **9,** whereby the pair of linkage modules (21) is coupled to the shaft of the link,
and wherein
the laboratory instrument (1) further preferably includes one or more light sources (60, 70, 80), these including a curved electric light (60) having a curvilinear illumination surface,
more preferably, the curved electric light (60) includes a LED source which either consists of a back-lit LED matrix or edge-lit LED elements, wherein the LED source is arranged according to the curvilinear illumination surface, and
even more preferably, the curvilinear illumination surface is at least partly profiled according to a cylindrical surface of a cylinder having said primary axis (191) as cylinder axis.

17. The laboratory instrument (1) according to claim **13,** wherein
the laboratory instrument (1) further comprises a sample holder (31),
the one or more sets of modules includes two sets of modules, the two sets including said set and a further set, wherein
said set includes the pair of linkage modules (21) consisting of the first linkage module and the second linkage module, and
said further set includes
a third linkage module (20) according to claim **7** or **8,** wherein the third linkage module is designed to be fixed to the base;
a fourth linkage module (20) according to claim **7** or **8,** wherein the fourth linkage module is designed to be transversely coupled to the slider element of the third linkage module, on top of the third linkage module, to be able to slide with respect to a longitudinal direction of the profile of the third linkage module; and
a fifth linkage module (30) according to claim **9,** which is designed to be transversely coupled to the slider element of the fourth linkage module, on top of the fourth linkage module, to be able to slide with respect to a longitudinal direction of the profile of the fourth linkage module, whereby a longitudinal direction of the profile of the fifth linkage module is perpendicular to the longitudinal direction of the profile of the fourth linkage module but parallel to the longitudinal direction of the profile of the third linkage module, wherein the sample holder (31) is designed to be coupled to the shaft of the fifth linkage module, to be able to be mounted on top of the fifth linkage module and rotate in-plane, thanks to the shaft.

## Patentansprüche

1. Ein Verbindungsmodul (20, 21, 30) für ein Laborinstrument (1, 2), wobei das Verbindungsmodul (20, 21, 30) umfasst:
ein Profil (20p, 30p) mit zwei Seitenkanten (L1, L2) und vier Längskanten (S1 - S4), wobei die Längskanten eine erste Seite (S1), eine zweite Seite (S2) und eine dritte Seite (S3) umfassen, wobei
sich die vier Längsseiten zwischen den beiden Seitenkanten erstrecken,
das Profil (20p, 30p) so strukturiert ist, dass es eine erste Nut (108, 34b) auf der ersten Seite (S1), eine zweite Nut (105, 106, 34a, 34c) auf der zweiten Seite (S2) und einen oder mehrere Hohlräume (107, 35) auf der dritten Seite (S3) aufweist, und
die erste Nut (108, 34b) und die zweite Nut (105, 106, 34a, 34c) zwei lineare Führungselemente bilden, die jeweils zwei Gleitgelenke ermöglichen;
einen rotierenden Elektromotor (110), der an einer der beiden Seiten (L1, L2) des Profils (20p, 30p) befestigt ist; und
eine Leiterplatte (25, 37), die am Profil (20p, 30p) an dessen dritter Seite (S3) befestigt ist, sodass eine verdeckte Seite (Sc) der Leiterplatte den einen oder mehreren Hohlräumen (107, 35) zugewandt ist,
wobei
die Leiterplatte (25, 37) eine Schaltung umfasst, die dazu ausgelegt ist, den rotierenden Elektromotor (110) im Betrieb zu steuern, und
die Schaltung elektronische Komponenten umfasst, die auf der verdeckten Seite (Sc) der Leiterplatte (25, 37) angeordnet und in dem einen oder den mehreren Hohlräumen (107, 35) untergebracht sind.

2. Das Verbindungsmodul (20, 21, 30) nach Anspruch 1, wobei die Leiterplatte (25, 37)
sich über den größten Teil einer Gesamtlänge des Profils (20p, 30p), vorzugsweise über im Wesentlichen die gesamte Länge des Profils (20p, 30p), erstreckt,
so dimensioniert ist, dass sie auf einer von der dritten Seite (S3) des Profils bedeckten Fläche angeordnet werden kann, und
so angeordnet ist, dass sie in keiner Richtung in der Ebene dieser Fläche über das Profil (20p, 30p) hinausragt.

3. Das Verbindungsmodul (20, 21, 30) nach Anspruch 1 oder 2, wobei
die Leiterplatte (25, 37) weiter einen elektrischen Anschluss (94) umfasst, der dazu ausgelegt ist, über einen Steckverbinder (93) eines Kabels (91) verbunden zu werden, wobei der elektrische Anschluss (94) mit einer oder mehreren der elektronischen Komponenten verbunden ist, um den rotierenden Elektromotor (110) über die Leiterplatte (25, 37) extern anzusteuern, und zwar mittels externer Signale, die vom Steckverbinder (93) über den elektrischen Anschluss (94) empfangen werden,
vorzugsweise der elektrische Anschluss (94) eine kreisförmige Buchse ist, wie beispielsweise eine Audiobuchse, damit sich das Kabel (91) und der Kupplungsstecker (93) frei relativ zueinander drehen können, und
noch mehr bevorzugt sich der Eingangsanschluss (94) an einem distalen Ende der Leiterplatte (25, 37), gegenüber einem proximalen Ende der Leiterplatte (25, 37), das dem rotierenden Elektromotor (110) am nächsten liegt. befindet.

4. Das Verbindungsmodul (20, 21, 30) nach Anspruch 3, wobei
die elektronischen Komponenten einen oder mehrere Sensoren umfassen,
die Schaltung dafür ausgelegt ist, von dem einen oder den mehreren Sensoren erzeugte Signale an den elektrischen Anschluss (94) zu übertragen,
der eine oder die mehreren Sensoren vorzugsweise eines der folgenden Elemente umfassen
einen Winkelsensor und
einen oder zwei magnetische Endlagensensoren, und
die Schaltung vorzugsweise eine Ansteuerschaltung umfasst, die zum Ansteuern des rotierenden Elektromotors ausgelegt ist.

5. Das Verbindungsmodul (20, 21, 30) nach einem der Ansprüche 1 bis 4, wobei
die elektronischen Komponenten einen Mikrocontroller (118) umfassen, der auf der Rückseite (Sc) der Leiterplatte (25, 37) angeordnet ist,
der Mikrocontroller (118) mit mindestens einer der elektronischen Komponenten verbunden ist,
der Mikrocontroller einen nichtflüchtigen programmierbaren Speicher umfasst, der vorzugsweise ein elektrisch löschbarer und programmierbarer Festspeicher ist, und
der Mikrocontroller so konfiguriert ist, dass er mit einer externen Vorrichtung, beispielsweise einer Vorrichtung, die eine grafische Benutzerschnittstelle ermöglicht, verbunden werden kann, um Signale von der externen Vorrichtung zu empfangen und den nichtflüchtigen programmierbaren Speicher entsprechend zu programmieren, damit er eine eindeutige digitale Kennung und Kalibrierungsparameter speichert,
und wobei vorzugsweise
die Leiterplatte (25, 37) ausserdem vom Benutzer betätigbare Schalter (29a und 29b) umfasst, die vorzugsweise Berührungsschalter sind,
die vom Benutzer betätigbaren Schalter auf einer freiliegenden Seite (Se) der Leiterplatte angeordnet sind, und
die vom Benutzer betätigbaren Schalter (29a und 29b) mit dem Mikrocontroller (118) verbunden sind, um zu ermöglichen, dass der rotierende Elektromotor (110) von einem Benutzer über die vom Benutzer betätigbaren Schalter (29) und den Mikrocontroller (118) direkt betätigt werden kann.

6. Das Verbindungsmodul (20, 21, 30) nach einem der Ansprüche 1 bis 5, wobei
das Verbindungsmodul (20, 21, 30) weiter ein Gehäuse (22, 33) umfasst, das im Wesentlichen die gleichen Querschnittsabmessungen wie das Profil (20, 30p) aufweist,
sich das Gehäuse (22, 33) rechtwinklig von einer der beiden Seitenflächen des Profils (20p, 30p) erstreckt, so dass das Profil und das Gehäuse zusammen eine L- oder T-Form bilden, und
der rotierende Elektromotor im Gehäuse (22, 23) angeordnet ist.

7. Das Verbindungsmodul (20, 21) nach einem der Ansprüche 1 bis 6, wobei
das Profil (20p, 30p) ausserdem einen Synchronriemen (24) und ein Gleitelement (23) umfasst,
der Synchronriemen (24) so im Profil angeordnet ist, dass er mindestens durch die erste Nut (108) verläuft,
das Gleitelement (23) am Synchronriemen befestigt und so ausgelegt ist, dass es mit dem durch die erste Nut (108) gebildeten Linearführungselement zusammenwirkt,
der rotierende Elektromotor (110) mit dem Synchronriemen (24) gekoppelt ist, um das Gleitelement (23) anzutreiben und es im Betrieb in der ersten Nut (108) gleiten zu lassen,
vorzugsweise der Synchronriemen (24) so im Profil angeordnet ist, dass er durch eine vierte Nut (106), die an einer vierten Seite (S4) der vier Längsseiten ausgebildet ist, die der ersten Seite gegenüberliegt, durchgeht, so dass der Synchronriemen (24) im Betrieb durch die erste Nut (108) und die vierte Nut (106) läuft,
das Gleitelement (23) vorzugsweise einen oder mehrere Magnete (27), vorzugsweise Permanentmagnete, umfasst, wobei die Magnete (27) zwei entgegengesetzte Pole parallel zu einer Längsrichtung des Profils (20p) bilden,
vorzugsweise die Leiterplatte (25) ausserdem einen oder zwei Endschalter (28a, 28b) umfasst, wobei jeder der Endschalter dazu ausgelegt ist, ein von dem einen oder den mehreren Magneten (27) erzeugtes Magnetfeld im Betrieb zu erfassen, und
vorzugsweise die elektronischen Komponenten ausserdem eine Erfassungsschaltung bilden, die dazu ausgelegt ist, einen oder zwei Endpunkte des Gleitelements (23) auf der Grundlage einer Ableitung des erfassten Magnetfelds zu erfassen und den rotierenden Elektromotor (110) entsprechend anzuhalten.

8. Das Verbindungsmodul (20, 21) nach Anspruch 7, wobei
das Verbindungsmodul weiter einen Adapter (17, 18) umfasst, der am Gleitelement (23) befestigt ist,
der Adapter (17, 18) so ausgelegt ist, dass ein zusätzliches Verbindungsmodul (20, 21, 30) am Adapter befestigt werden kann, so dass das zusätzliche Verbindungsmodul (20, 21, 30) bei Betätigung des Rotationsmotors (110) im Betrieb entlang der ersten Nut (108) des Verbindungsmoduls (20, 21) gleiten kann,
das zusätzliche Verbindungsmodul (20, 21, 30) ein Verbindungsmodul nach einem der Ansprüche 1 bis 7 ist, und
der Adapter (17, 18) vorzugsweise ausserdem so ausgelegt ist, dass er eine Ausrichtung des zusätzlichen Verbindungsmoduls in Bezug auf das Verbindungsmodul beim Befestigen des zusätzlichen Verbindungsmoduls (20, 21, 30) am Adapter erzwingt, wobei der Adapter (17, 18) vorzugsweise so ausgebildet ist, dass sich die jeweiligen Profile des Verbindungsmoduls und des zusätzlichen Verbindungsmoduls entweder parallel oder senkrecht zueinander erstrecken können.

9. Das Verbindungsmodul (30) nach einem der Ansprüche 1 bis 6, wobei
das Verbindungsmodul (30) weiter eine Welle umfasst, die sich senkrecht zu einer Längsrichtung des Profils (20p, 30p) erstreckt, und eine Kupplung (131), die so angeordnet ist, dass sie mit einem externen Element (32) gekoppelt werden kann, wobei die Kupplung (131) um eine Achse drehbar ist, die senkrecht zur dritten Seite (S3) steht,
der rotierende Elektromotor (110) mit der Welle gekoppelt und so konfiguriert ist, dass er die Welle dreht, um die Kupplung (131) zu drehen, und
vorzugsweise das Verbindungsmodul einen Winkelsensor umfasst, der so konfiguriert ist, dass er einen Winkel der Welle misst.

10. Das Verbindungsmodul (20, 21, 30) nach einem der Ansprüche 1 bis 9, wobei
eine Länge des Profils (20p, 30p), gemessen in einer Längsrichtung parallel zu den vier Längsseiten (S1 - S4), zwischen 40 und 300 mm beträgt, während eine durchschnittliche Breite des Profils, gemessen senkrecht zu der Längsrichtung, zwischen 10 mm und 50 mm beträgt.

11. Ein Laborinstrument (1, 2), wobei
das Laborinstrument (1, 2) ein oder mehrere Sets von Modulen umfasst, wobei jedes der Sets zwei Verbindungsmodule (20, 21, 30) umfasst, die jeweils einem der Ansprüche 1 bis 10 entsprechen, und
in jedem des einen oder der mehreren Sets von Modulen die beiden Verbindungsmodule (20, 21, 30) mechanisch miteinander gekoppelt sind, um eine Verbindung zu bilden, die eine Relativbewegung der beiden Verbindungsmodule bei Betätigung mindestens eines der jeweiligen rotierenden Elektromotoren (110) ermöglicht.

12. Das Laborinstrument (1, 2) nach Anspruch 11, wobei
ein bestimmtes Set des einen oder der mehreren Sets von Modulen zusätzlich zu ihren beiden Verbindungsmodulen (20, 21, 30) ein Experimentmodul (31, 40) umfasst,
das Experimentmodul (31, 40) einen beweglichen Teil umfasst und mechanisch mit einem der beiden Verbindungsmodule (20, 21, 30) des gegebenen Sets gekoppelt ist, um eine Verbindung zu bilden, die eine Relativbewegung des beweglichen Teils in Bezug auf eines oder jedes der beiden Verbindungsmodule des gegebenen Sets bei Betätigung des rotierenden Elektromotors eines oder jedes der beiden Verbindungsmodule ermöglicht, und
vorzugsweise das Experimentmodul (31, 40) entweder ein Bildgebungsmodul (40) oder ein Probenhalter (31) ist.

13. Das Laborinstrument (1, 2) nach Anspruch 12, wobei:
die beiden Verbindungsmodule des gegebenen Sets aus einem ersten Verbindungsmodul (20, 21) und einem zweiten Verbindungsmodul (20, 21) bestehen, die jeweils gemäß Anspruch 7 oder 8 sind, und
das zweite Verbindungsmodul (20, 21) mit dem Gleitelement (23) des ersten Verbindungsmoduls gekoppelt ist, so dass das zweite Verbindungsmodul entlang der ersten Nut (108) des ersten Moduls gleiten kann, wenn es durch den rotierenden Elektromotor (110) des ersten Verbindungsmoduls angetrieben wird.

14. Das Laborinstrument (1, 2) nach Anspruch 13, wobei
das Experimentmodul (31, 40) ein Bildgebungsmodul (40) ist, das zusätzlich ein Gehäuse (42) sowie einen Bildsensor (46) und eine Linse (41) umfasst, die im Gehäuse (42) untergebracht sind,
das Gehäuse (42) starr an dem Profil (20p, 30p) des zweiten Verbindungsmoduls befestigt ist und
das Gleitelement des zweiten Verbindungsmoduls mit dem Bildsensor (46) oder der Linse (41) gekoppelt ist, um bei Betätigung des zweiten Verbindungsmoduls durch den rotierenden Elektromotor (110) eine Änderung des relativen Abstands zwischen dem Bildsensor (46) und der Linse (41) zu ermöglichen.

15. Das Laborinstrument (1) nach Anspruch 13, wobei
das zweite Verbindungsmodul ein Verbindungsmodul (30) nach Anspruch 9 ist,
das genannte Experimentmodul ein Probenhalter (31) ist, der über eine Kupplung (131) mit der Welle des zweiten Verbindungsmoduls (30) gekoppelt ist, damit der Probenhalter in der Ebene gedreht werden kann,
das zweite Verbindungsmodul (30) mit dem Gleitelement des ersten Verbindungsmoduls (20) über dem ersten Verbindungsmodul gekoppelt ist, um relativ zu einer Längsrichtung des Profils des ersten Verbindungsmoduls (30) gleiten zu können.

16. Das Laborinstrument (1, 2) nach Anspruch 13, wobei
das Laborinstrument (1, 2) weiter eine Basis (10) umfasst,
eine Verbindung (50) drehbar an der Basis (10) angebracht ist, um sich entlang einer kreisförmigen Bahn drehen zu können, die auf einer primären Drehachse (191) zentriert ist,
das Paar von Verbindungsmodulen drehbar an der Verbindung (50) angebracht ist, um sich um eine sekundäre Drehachse (192) drehen zu können, die parallel zur primären Drehachse verläuft, und
die Verbindung vorzugsweise ein Verbindungsmodul nach Anspruch 9 ist, so dass das Paar von Verbindungsmodulen (21) mit der Welle der Verbindung gekoppelt ist,
und wobei
das Laborinstrument (1) vorzugsweise weiter eine oder mehrere Lichtquellen (60, 70, 80) umfasst, die eine gekrümmte elektrische Lampe (60) mit einer gekrümmten Beleuchtungsfläche umfassen,
mehr bevorzugt die gekrümmte elektrische Lampe (60) eine LED-Quelle umfasst, die entweder aus einer hintergrundbeleuchteten LED-Matrix oder aus kantengebelichteten LED-Elementen besteht, wobei die LED-Quelle entsprechend der gekrümmten Beleuchtungsfläche angeordnet ist, und
sogar noch mehr bevorzugt die gekrümmte Beleuchtungsfläche zumindest teilweise entsprechend einer zylindrischen Fläche eines Zylinders mit der genannten Primärachse (191) als Zylinderachse profiliert ist.

17. Das Laborinstrument (1) nach Anspruch 13, wobei
das Laborinstrument (1) weiter einen Probenhalter (31) umfasst,
das eine oder die mehreren Sets von Modulen zwei Sets von Modulen umfassen, wobei die beiden Sets das eine Set und ein weiteres Set umfassen, wobei
das eine Set das Paar von Verbindungsmodulen (21) umfasst, das aus dem ersten Verbindungsmodul und dem zweiten Verbindungsmodul besteht, und
das weitere Set
ein drittes Verbindungsmodul (20) nach Anspruch 7 oder 8 umfasst, wobei das dritte Verbindungsmodul so ausgelegt ist, dass es an der Basis befestigt werden kann;
ein viertes Verbindungsmodul (20) nach Anspruch 7 oder 8 umfasst, wobei das vierte Verbindungsmodul so ausgelegt ist, dass es quer mit dem Gleitelement des dritten Verbindungsmoduls über dem dritten Verbindungsmodul gekoppelt werden kann, um relativ zu einer Längsrichtung des Profils des dritten Verbindungsmoduls gleiten zu können; und
ein fünftes Verbindungsmodul (30) nach Anspruch 9 umfasst, das so ausgelegt ist, dass es quer mit dem Gleitelement des vierten Verbindungsmoduls über dem vierten Verbindungsmodul gekoppelt werden kann, um relativ zu einer Längsrichtung des Profils des vierten Verbindungsmoduls gleiten zu können, wobei die Längsrichtung des Profils des fünften Verbindungsmoduls senkrecht zur Längsrichtung des Profils des vierten Verbindungsmoduls, aber parallel zur Längsrichtung des Profils des dritten Verbindungsmoduls verläuft,
wobei der Probenhalter (31) so ausgelegt ist, dass er mit der Welle des fünften Verbindungsmoduls gekoppelt werden kann, um über dem fünften Verbindungsmodul montiert zu werden und sich dank der Welle in der Ebene drehen zu können.

## Revendications

1. Module de liaison (20, 21, 30) pour un instrument de laboratoire (1, 2), dans lequel le module de liaison (20, 21, 30) comprend :
un profilé (20p, 30p) ayant deux côtés latéraux (L1, L2) et quatre côtés longitudinaux (S1 - S4), ces derniers comprenant un premier côté (S1), un deuxième côté (S2) et un troisième côté (S3), dans lequel
les quatre côtés longitudinaux s'étendent entre les deux côtés latéraux,
le profilé (20p, 30p) est structuré de manière à comporter une première rainure (108, 34b) sur le premier côté (S1), une deuxième rainure (105, 106, 34a, 34c) sur le deuxième côté (S2) et une ou plusieurs cavités (107, 35) sur le troisième côté (S3), et
la première rainure (108, 34b) et la deuxième rainure (105, 106, 34a, 34c) forment deux éléments de guidage linéaires destinés à permettre respectivement deux articulations coulissantes ;
un moteur électrique rotatif (110) fixé à l'un des deux côtés latéraux (L1, L2) du profilé (20p, 30p) ; et
une carte de circuit (25, 37) fixée au profilé (20p, 30p), sur le troisième côté (S3) de celui-ci, de sorte qu'un côté caché (Sc) de la carte de circuit fait face auxdites une ou plusieurs cavités (107, 35),
dans lequel
la carte de circuit (25, 37) comprend un circuit conçu pour commander le moteur électrique rotatif (110), en fonctionnement, et
le circuit comprend des composants électroniques qui sont disposés sur le côté caché (Sc) de la carte de circuit (25, 37) et logés à l'intérieur desdites une ou plusieurs cavités (107, 35).

2. Le module de liaison (20, 21, 30) selon la revendication 1, dans lequel la carte de circuit (25, 37)
s'étend sur la majeure partie d'une longueur totale du profilé (20p, 30p), de préférence sur essentiellement toute la longueur du profilé (20p, 30p),
est dimensionnée pour s'aménager sur une surface couverte par le troisième côté (S3) du profilé, et
est agencée de manière à ne pas dépasser du profilé (20p, 30p) dans toute direction dans le plan de cette surface.

3. Le module de liaison (20, 21, 30) selon la revendication 1 ou 2, dans lequel
la carte de circuit (25, 37) comprend en outre un port électrique (94) conçu pour être connecté par un connecteur d'accouplement (93) d'un câble (91), le port électrique (94) étant connecté à l'un ou plusieurs des composants électroniques afin de permettre au moteur électrique rotatif (110) d'être actionné de manière externe via la carte de circuit (25, 37), grâce à des signaux externes reçus du connecteur d'accouplement (93) via ledit port électrique (94),
de préférence, le port électrique (94) est une prise femelle circulaire telle qu'une prise jack audio, pour permettre au câble (91) et au connecteur d'accouplement (93) de tourner librement l'un par rapport à l'autre, et
de plus grande préférence, le port d'entrée (94) est situé à une extrémité distale de la carte de circuit (25, 37), à l'opposé d'une extrémité proximale de la carte de circuit (25, 37), qui est la plus proche du moteur électrique rotatif (110).

4. Le module de liaison (20, 21, 30) selon la revendication 3, dans lequel les composants électroniques comprennent un ou plusieurs capteurs,
ledit circuit est adapté pour transmettre des signaux produits par lesdits un ou plusieurs capteurs au port électrique (94),
lesdits un ou plusieurs capteurs comprennent de préférence l'un des éléments suivants
un capteur d'angle, et
un ou deux capteurs magnétiques de fin de course, et
ledit circuit comprend de préférence un circuit d'entraînement conçu pour entraîner le moteur électrique rotatif.

5. Le module de liaison (20, 21, 30) selon l'une quelconque des revendications **1** à **4,**
dans lequel
les composants électroniques comprennent un microcontrôleur (118), qui est disposé sur le côté caché (Sc) de la carte de circuit (25, 37),
le microcontrôleur (118) est connecté à au moins l'un des composants électroniques,
le microcontrôleur comprend une mémoire programmable non volatile, qui est de préférence une mémoire morte effaçable électriquement et programmable, et
le microcontrôleur est configuré pour se connecter à un dispositif externe, tel qu'un dispositif permettant une interface utilisateur graphique, afin de recevoir des signaux provenant du dispositif externe et de programmer en conséquence la mémoire programmable non volatile, afin qu'elle stocke un identifiant numérique unique et des paramètres d'étalonnage,
et dans lequel, de préférence,
la carte de circuit (25, 37) comprend en outre des commutateurs actionnables par l'utilisateur (29a et 29b), qui sont de préférence des commutateurs tactiles,
les commutateurs actionnables par l'utilisateur sont disposés sur un côté exposé (Se) de la carte de circuit, et
les commutateurs actionnables par l'utilisateur (29a et 29b) sont connectés audit microcontrôleur (118) afin de permettre au moteur électrique rotatif (110) d'être directement actionné par un utilisateur via les commutateurs actionnables par l'utilisateur (29) et le microcontrôleur (118).

6. Le module de liaison (20, 21, 30) selon l'une quelconque des revendications 1 à 5, dans lequel
le module de liaison (20, 21, 30) comprend en outre un boîtier (22, 33) ayant essentiellement les mêmes dimensions en coupe transversale que le profilé (20, 30p),
le boîtier (22, 33) s'étend à angle droit à partir de l'un des deux côtés latéraux du profilé (20p, 30p), de sorte que le profilé et le boîtier forment ensemble une forme en L ou en T, et le moteur électrique rotatif est disposé dans le boîtier (22, 23).

7. Le module de liaison (20, 21) selon l'une quelconque des revendications **1** à **6,** dans lequel
le profilé (20p, 30p) comprend en outre une courroie synchrone (24) et un élément coulissant (23),
la courroie synchrone (24) est disposée dans le profilé de manière à passer au moins à travers la première rainure (108),
l'élément coulissant (23) est fixé à la courroie synchrone et conçu pour coopérer avec l'élément de guidage linéaire formé par la première rainure (108),
le moteur électrique rotatif (110) est couplé à la courroie synchrone (24) pour actionner l'élément coulissant (23) et le faire coulisser dans la première rainure (108), en fonctionnement,
de préférence, la courroie synchrone (24) est disposée dans le profilé de manière à passer à travers une quatrième rainure (106) structurée sur un quatrième côté (S4) des quatre côtés longitudinaux, le quatrième côté opposé au premier côté, afin que la courroie synchrone (24) passe à travers chacune des première rainure (108) et quatrième rainure (106), en fonctionnement,
l'élément coulissant (23) comprend de préférence un ou plusieurs aimants (27), de préférence des aimants permanents, les aimants (27) formant deux pôles opposés parallèlement à une direction longitudinale du profilé (20p),
de préférence, la carte de circuit (25) comprend en outre un ou deux capteurs de fin de course (28a, 28b), chacun des capteurs de fin de course étant adapté pour détecter un champ magnétique généré par lesdits un ou plusieurs aimants (27), en fonctionnement, et
de préférence, les composants électroniques forment en outre un circuit de détection conçu pour détecter un ou deux points d'extrémité de l'élément coulissant (23) sur la base d'une dérivée du champ magnétique détecté et arrêter en conséquence le moteur électrique rotatif (110).

8. Le module de liaison (20, 21) selon la revendication7, dans lequel
le module de liaison comprend en outre un adaptateur (17, 18), qui est fixé à l'élément coulissant (23),
l'adaptateur (17, 18) est conçu pour permettre à un module de liaison supplémentaire (20, 21, 30) d'être fixé à l'adaptateur, de sorte que ledit module de liaison supplémentaire (20, 21, 30) puisse coulisser le long de la première rainure (108) du module de liaison (20, 21) lors de l'actionnement du moteur rotatif (110), en fonctionnement,
ledit module de liaison supplémentaire (20, 21, 30) est un module de liaison selon l'une quelconque des revendications **1** à **7,** et
ledit adaptateur (17, 18) est, de préférence, en outre conçu pour contraindre une orientation dudit module de liaison supplémentaire par rapport au module de liaison lors de la fixation dudit module de liaison supplémentaire (20, 21, 30) à l'adaptateur, ledit adaptateur (17, 18) étant de plus grande préférence formé de manière à permettre aux profilés respectifs du module de liaison et du module de liaison supplémentaire de s'étendre soit parallèlement, soit perpendiculairement l'un à l'autre.

9. Le module de liaison (30) selon l'une quelconque des revendications **1** à **6,** dans lequel
le module de liaison (30) comprend en outre un arbre s'étendant perpendiculairement à une direction longitudinale du profilé (20p, 30p) et un coupleur (131) agencé pour permettre son couplage avec un élément externe (32), le coupleur (131) pouvant tourner autour d'un axe qui est perpendiculaire au troisième côté (S3),
le moteur électrique rotatif (110) est couplé à l'arbre et configuré pour faire tourner l'arbre, afin de faire tourner le coupleur (131), et
le module de liaison comprend de préférence un capteur d'angle configuré pour mesurer un angle de l'arbre.

10. Le module de liaison (20, 21, 30) selon l'une quelconque des revendications **1** à **9,** dans lequel
une longueur du profilé (20p, 30p), mesurée dans une direction longitudinale parallèle aux quatre côtés longitudinaux (S1 - S4), est comprise entre 40 et 300 mm, tandis qu'une largeur moyenne du profilé, mesurée perpendiculairement à ladite direction longitudinale, est comprise entre 10 mm et 50 mm.

11. Instrument de laboratoire (1, 2), dans lequel
l'instrument de laboratoire (1, 2) comprend un ou plusieurs ensembles de modules, chacun des ensembles comprenant deux modules de liaison (20, 21, 30), chacun selon l'une des revendications **1** à **10,** et
dans chacun des un ou plusieurs ensembles de modules, les deux modules de liaison (20, 21, 30) sont couplés mécaniquement l'un à l'autre pour former une liaison permettant un mouvement relatif des deux modules de liaison lors de l'actionnement d'au moins l'un des moteurs électriques rotatifs respectifs (110).

12. L'instrument de laboratoire (1, 2) selon la revendication **11,** dans lequel
un ensemble donné desdits un ou plusieurs ensembles de modules comprend en outre un module expérimental (31, 40), en plus de ses deux modules de liaison (20, 21, 30),
le module expérimental (31, 40) comprend une partie mobile et est couplé mécaniquement à l'un des deux modules de liaison (20, 21, 30) dudit ensemble donné pour former une liaison permettant un mouvement relatif de ladite partie mobile par rapport à l'un ou à chacun des deux modules de liaison dudit ensemble donné lors de l'actionnement du moteur électrique rotatif de l'un ou de chacun des deux modules de liaison, et
de préférence, le module expérimental (31, 40) est l'un parmi un module d'imagerie (40) et un porte-échantillon (31).

13. L'instrument de laboratoire (1, 2) selon la revendication **12,** dans lequel :
les deux modules de liaison de l'ensemble donné sont constitués d'un premier module de liaison (20, 21) et d'un deuxième module de liaison (20, 21), chacun selon la revendication **7** ou **8,** et
le deuxième module de liaison (20, 21) est couplé à l'élément coulissant (23) du premier module de liaison, de sorte que le deuxième module de liaison peut coulisser le long de la première rainure (108) du premier module lorsqu'il est actionné par le moteur électrique rotatif (110) du premier module de liaison.

14. L'instrument de laboratoire (1, 2) selon la revendication **13,** dans lequel
ledit module expérimental (31, 40) est un module d'imagerie (40), qui comprend en outre un boîtier (42), ainsi qu'un capteur d'image (46) et une lentille (41) qui sont enfermés dans le boîtier (42),
le boîtier (42) est fixé de manière rigide au profilé (20p, 30p) du deuxième module de liaison, et
l'élément coulissant du deuxième module de liaison est couplé à l'un parmi le capteur d'image (46) et la lentille (41), afin de permettre de modifier la distance relative entre le capteur d'image (46) et la lentille (41) lors de l'actionnement par le moteur électrique rotatif (110) du deuxième module de liaison.

15. L'instrument de laboratoire (1) selon la revendication **13,** dans lequel
le deuxième module de liaison est un module de liaison (30) selon la revendication **9,**
ledit module expérimental est un porte-échantillon (31), qui est couplé à l'arbre du deuxième module de liaison (30), via un coupleur (131), pour permettre au porte-échantillon d'être tourné dans le plan,
le deuxième module de liaison (30) est couplé à l'élément coulissant du premier module de liaison (20), au-dessus du premier module de liaison, afin de pouvoir coulisser par rapport à une direction longitudinale du profilé du premier module de liaison (30).

16. L'instrument de laboratoire (1, 2) selon la revendication **13,** dans lequel
l'instrument de laboratoire (1, 2) comprend en outre une base (10),
une liaison (50) est montée de manière rotative sur la base (10), afin de pouvoir tourner le long d'une trajectoire circulaire centrée sur un axe (191) de rotation primaire,
la paire de modules de liaison est montée de manière rotative sur la liaison (50), afin de pouvoir tourner autour d'un axe de rotation secondaire (192) qui est parallèle à l'axe de rotation primaire, et
la liaison est de préférence un module de liaison selon la revendication **9,** de sorte que la paire de modules de liaison (21) est couplée à l'arbre de la liaison,
et dans lequel
l'instrument de laboratoire (1) comprend en outre de préférence une ou plusieurs sources lumineuses (60, 70, 80), celles-ci comprenant une lampe électrique incurvée (60) ayant une surface d'éclairage curviligne,
de préférence, la lampe électrique incurvée (60) comprend une source LED qui consiste soit en une matrice LED rétroéclairée, soit en des éléments LED éclairés par la tranche, la source LED étant agencée selon la surface d'éclairage curviligne, et
de plus grande préférence, la surface d'éclairage curviligne est au moins partiellement profilée selon une surface cylindrique d'un cylindre ayant ledit axe primaire (191) comme axe de cylindre.

17. L'instrument de laboratoire (1) selon la revendication **13,** dans lequel
l'instrument de laboratoire (1) comprend en outre un porte-échantillon (31),
lesdits un ou plusieurs ensembles de modules comprennent deux ensembles de modules, les deux ensembles comprenant ledit ensemble et un autre ensemble, dans lequel
ledit ensemble comprend la paire de modules de liaison (21) constituée du premier module de liaison et du deuxième module de liaison, et
ledit autre ensemble comprend
un troisième module de liaison (20) selon la revendication **7** ou **8,** dans lequel le troisième module de liaison est conçu pour être fixé à la base ;
un quatrième module de liaison (20) selon la revendication **7** ou **8,** dans lequel le quatrième module de liaison est conçu pour être couplé transversalement à l'élément coulissant du troisième module de liaison, au-dessus du troisième module de liaison, afin de pouvoir coulisser par rapport à une direction longitudinale du profilé du troisième module de liaison ; et
un cinquième module de liaison (30) selon la revendication 9, qui est conçu pour être couplé transversalement à l'élément coulissant du quatrième module de liaison, au-dessus du quatrième module de liaison, afin de pouvoir coulisser par rapport à une direction longitudinale du profilé du quatrième
module de liaison, la direction longitudinale du profilé du cinquième module de liaison étant perpendiculaire à la direction longitudinale du profilé du quatrième module de liaison mais parallèle à la direction longitudinale du profilé du troisième module de liaison, dans lequel le porte-échantillon (31) est conçu pour être couplé à l'arbre du cinquième module de liaison, afin de pouvoir être monté au-dessus du cinquième module de liaison et tourner dans le plan, grâce à l'arbre.
